# EUROPEAN PATENT APPLICATION

(11) **EP 4 734 512 A1**
(43) Date of publication of application: **29.04.2026**
(21) Application number: 24825017.7
(22) Date of filing: 06.05.2024
(51) Int. Cl.: H04N 19/177

(54) **NEURAL NETWORK-BASED IMAGE FILTERING METHODS AND APPARATUSES, DEVICE, AND STORAGE MEDIUM**

(30) Priority: 21.06.2023 CN 202310751931
(71) Applicant: Tencent Technology (Shenzhen) Company Limited, Shenzhen, Guangdong 518057 (CN)
(72) Inventor: CHANG, Renjie, Shenzhen, Guangdong 518057 (CN); WANG, Liqiang, Shenzhen, Guangdong 518057 (CN)
(74) Representative: Gunzelmann, Rainer
(86) International application number: PCT/CN2024/091271
(87) International publication number: WO 2024/260119

(57) **Abstract**

Provided in the present application are neural network-based image filtering methods and apparatuses, a device, and a storage medium, which can be used in the fields of image processing, video coding and decoding, video live streaming, etc. A method comprises : determining from among M+1 data processing modes a first data processing mode for information to be filtered; if the first data processing mode is a data rearrangement mode, on the basis of the first data processing mode, performing data rearrangement on a reconstructed image block of the information to be filtered and, by means of a neural network filter, filtering the rearranged information to be filtered, so as to obtain a filtered image block of the rearranged information to be filtered; and, on the basis of the first data processing mode, performing reverse data rearrangement on the filtered image of the rearranged information to be filtered, so as to obtain a filtered image block of the reconstructed image block. Thus, the present application performs the data rearrangement of the information to be filtered, such that the data distribution characteristic of the rearranged information to be filtered is consistent with or approximate to the data distribution characteristic of training data, thereby improving the filtering effect of the neural network filter.

## Description

### RELATED APPLICATION

This application claims priority to Chinese Patent Application No. 2023107519314, filed with the China National Intellectual Property Administration on June 21, 2023 and entitled "NEURAL NETWORK-BASED PICTURE FILTERING METHOD AND APPARATUS, DEVICE, AND STORAGE MEDIUM", which is incorporated herein by reference in its entirety.

### FIELD OF THE TECHNOLOGY

Embodiments of this application relate to the field of picture coding and decoding technologies, and in particular, to a neural network-based picture filtering method and apparatus, a device, and a storage medium.

### BACKGROUND OF THE DISCLOSURE

With the development of video technologies, a large amount of data is included in video data. To facilitate transmission of the video data, a video apparatus performs video compression technology, to more efficiently transmit or store the video data. In video compression, an encoder side and a decoder side both need to perform operations such as inverse quantization and inverse transform, to obtain a reconstructed picture. Because a loss is introduced to video compression, the reconstructed picture is filtered to reduce a compression loss of the picture.

With the rapid development of neural network technologies, a neural network filter is widely used in video processing. However, in an actual application process, data distribution of information actually to be filtered by the neural network filter and data distribution of training data may be different, leading to a non-ideal filtering effect of the neural network filter.

### SUMMARY

This application provides a neural network-based picture filtering method and apparatus, a device, and a storage medium, to improve a picture filtering effect.

According to a first aspect, this application provides a neural network-based picture filtering method, applied to a decoding device. The method includes:
determining a first data processing mode for to-be-filtered information from M+1 data processing modes, the M+1 data processing modes including a data non-rearrangement mode and M data rearrangement modes, the to-be-filtered information including a to-be-filtered reconstructed picture block, the reconstructed picture block being a constructed picture or a partial region of a reconstructed picture, and M being a positive integer;
performing, when the first data processing mode is one of the M data rearrangement modes, data rearrangement on the reconstructed picture block according to the first data processing mode, to obtain rearranged to-be-filtered information;
filtering the rearranged to-be-filtered information by using a neural network filter, to obtain a filtered picture block of the rearranged to-be-filtered information; and
performing data inverse rearrangement on the filtered picture block of the rearranged to-be-filtered information according to the first data processing mode, to obtain a filtered picture block of the reconstructed picture block.

According to a second aspect, this application provides a neural network-based picture filtering method, applied to a coding device. The method includes:
determining a first data processing mode for to-be-filtered information from M+1 data processing modes, the M+1 data processing modes including a data non-rearrangement mode and M data rearrangement modes, the to-be-filtered information including a reconstructed picture block, the reconstructed picture block being a constructed picture or a partial region of a reconstructed picture, and M being a positive integer;
performing, when the first data processing mode is one of the M data rearrangement modes, data rearrangement on the to-be-filtered information according to the first data processing mode, to obtain rearranged to-be-filtered information;
filtering the rearranged to-be-filtered information by using a neural network filter, to obtain a filtered picture block of the rearranged to-be-filtered information; and
performing data inverse rearrangement on the filtered picture block of the rearranged to-be-filtered information according to the first data processing mode, to obtain a filtered picture block of the reconstructed picture block.

According to a third aspect, this application provides a neural network-based picture filtering apparatus, applied to a decoding device. The apparatus includes:
a rearrangement determining unit, configured to determine a first data processing mode for to-be-filtered information from M+1 data processing modes, the M+1 data processing modes including a data non-rearrangement mode and M data rearrangement modes, the to-be-filtered information including a to-be-filtered reconstructed picture block, the reconstructed picture block being a constructed picture or a partial region of a reconstructed picture, and M being a positive integer;
a rearrangement filtering unit, configured to: perform, when the first data processing mode is one of the M data rearrangement modes, data rearrangement on the reconstructed picture block according to the first data processing mode, to obtain rearranged to-be-filtered information, and
filter the rearranged to-be-filtered information by using a neural network filter, to obtain a filtered picture block of the rearranged to-be-filtered information; and
an inverse rearrangement unit, configured to perform data inverse rearrangement on the filtered picture block of the rearranged to-be-filtered information according to the first data processing mode, to obtain a filtered picture block of the reconstructed picture block.

According to a fourth aspect, this application provides a neural network-based picture filtering apparatus, applied to a coding device. The apparatus includes:
a rearrangement determining unit, configured to determine a first data processing mode for to-be-filtered information from M+1 data processing modes, the M+1 data processing modes including a data non-rearrangement mode and M data rearrangement modes, the to-be-filtered information including a reconstructed picture block, the reconstructed picture block being a constructed picture or a partial region of a reconstructed picture, and M being a positive integer;
a rearrangement filtering unit, configured to: perform, when the first data processing mode is one of the M data rearrangement modes, data rearrangement on the to-be-filtered information according to the first data processing mode, to obtain rearranged to-be-filtered information, and
filter the rearranged to-be-filtered information by using a neural network filter, to obtain a filtered picture block of the rearranged to-be-filtered information; and
an inverse rearrangement unit, configured to perform data inverse rearrangement on the filtered picture block of the rearranged to-be-filtered information according to the first data processing mode, to obtain a filtered picture block of the reconstructed picture block.

According to a fifth aspect, a decoder is provided, including a processor and a memory. The memory is configured to store a computer program. The processor is configured to invoke and run the computer program stored in the memory to perform the method according to the first aspect or implementations thereof.

According to a sixth aspect, an encoder is provided, including a processor and a memory. The memory is configured to store a computer program. The processor is configured to invoke and run the computer program stored in the memory to perform the method according to the second aspect or implementations thereof.

According to a seventh aspect, a chip is provided, configured to implement the method according to any one of the first aspect and the second aspect or implementations thereof. Specifically, the chip includes a processor, configured to invoke a computer program from a memory and run the computer program, so that a device on which the chip is installed performs the method according to any one of the first aspect and the second aspect or implementations thereof.

According to an eighth aspect, a non-transitory computer-readable storage medium is provided, configured to store a computer program. The computer program enables a computer to perform the method according to any one of the first aspect and the second aspect or implementations thereof.

According to a ninth aspect, a computer program product is provided, including computer program instructions. The computer program instructions enable a computer to perform the method according to any one of the first aspect and the second aspect or implementations thereof.

According to a tenth aspect, a computer program is provided. When the computer program is run on a computer, the computer is enabled to perform the method according to any one of the first aspect and the second aspect or implementations thereof.

In conclusion, in this application, the first data processing mode for the to-be-filtered information is determined from the M+1 data processing modes. The M+1 data processing modes include the data non-rearrangement mode and the M data rearrangement modes. The to-be-filtered information includes the to-be-filtered reconstructed picture block. If the first data processing mode is one of the M data rearrangement modes, data rearrangement is performed on the reconstructed picture block in the to-be-filtered information according to the first data processing mode, to obtain the rearranged to-be-filtered information, and the rearranged to-be-filtered information is filtered by using the neural network filter, to obtain the filtered picture block of the rearranged to-be-filtered information. Data inverse rearrangement is performed on the filtered picture block of the rearranged to-be-filtered information according to the first data processing mode, to obtain the filtered picture block of the reconstructed picture block. To be specific, in this application, before the to-be-filtered information is filtered, whether data rearrangement needs to be performed on the to-be-filtered information is first determined. If it is determined that data rearrangement needs to be performed, data rearrangement is performed on the reconstructed picture block in the to-be-filtered information in the first data processing mode, so that a data distribution characteristic of the rearranged to-be-filtered information is the same as or close to a data distribution characteristic of training data, improving a filtering effect of the neural network filter on the rearranged to-be-filtered information. Therefore, a picture filtering effect and picture coding and decoding performance are improved.

### BRIEF DESCRIPTION OF THE DRAWINGS

FIG. 1 is a schematic block diagram of a video coding and decoding system according to an embodiment of this application.
FIG. 2 is a schematic diagram of a coding framework according to an embodiment of this application.
FIG. 3 is a schematic diagram of a decoding framework according to an embodiment of this application.
FIG. 4 is a schematic diagram of a coding unit.
FIG. 5 is a schematic diagram of a filtering process of a neural network filter.
FIG. 6A is a schematic diagram of a difference between a data distribution characteristic of a training set and a data distribution characteristic of a test set.
FIG. 6B is a schematic diagram of a data distribution characteristic of a rotated test set.
FIG. 7 is a schematic flowchart of a neural network-based picture filtering method according to an embodiment of this application.
FIG. 8A to FIG. 8D are schematic diagrams of a reconstructed picture block.
FIG. 9 is a schematic diagram of a surrounding filtered region of a reconstructed picture block.
FIG. 10 is a schematic diagram of a process of determining a first data processing mode according to an embodiment of this application.
FIG. 11 is a schematic flowchart of a neural network-based picture filtering method according to an embodiment of this application.
FIG. 12 is a schematic block diagram of a neural network-based picture filtering apparatus according to an embodiment of this application.
FIG. 13 is a schematic block diagram of a neural network-based picture filtering apparatus according to an embodiment of this application.
FIG. 14 is a schematic block diagram of an electronic device according to an embodiment of this application.

### DESCRIPTION OF EMBODIMENTS

The technical solutions in embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

Terms "first", "second", and the like in the specification, claims, and accompanying drawings of this application are intended to distinguish between similar objects, rather than describe a specific sequence or order. Data termed in such a way is interchangeable in proper circumstances, so that the embodiments of this application described herein can be implemented in other orders than the order illustrated or described herein. In the embodiments of the present disclosure, "B corresponding to A" indicates that B is associated with A. In an implementation, B may be determined based on A. However, determining B based on A does not mean determining B based only on A, and B may alternatively be determined based on A and/or other information. In addition, the terms "include" and "have" and any other variants are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device. In addition, in the descriptions of this application, unless otherwise specified, "a plurality of" means two or more than two.

This application may be applied to the field of picture coding and decoding, the field of video coding and decoding, the field of hardware video coding and decoding, the field of dedicated circuit video coding and decoding, the field of real-time video coding and decoding, and the like. For example, the solutions of this application may be combined with a deep learning-based end-to-end picture coding standard, for example, JPEG AI. Alternatively, the solutions of this application may be combined with another exclusive or industry standard for operation. The standard includes ITU-TH.261, ISO/IECMPEG-1 Visual, ITU-TH.262, ISO/IECMPEG-2 Visual, ITU-TH.263, ISO/IECMPEG-4 Visual, and ITU-TH.264 (also referred to as ISO/IECMPEG-4 AVC), including scalable video codec (SVC) and multi-view video codec (MVC) extensions. The technology of this application is not limited to any specific coding and decoding standard or technology.

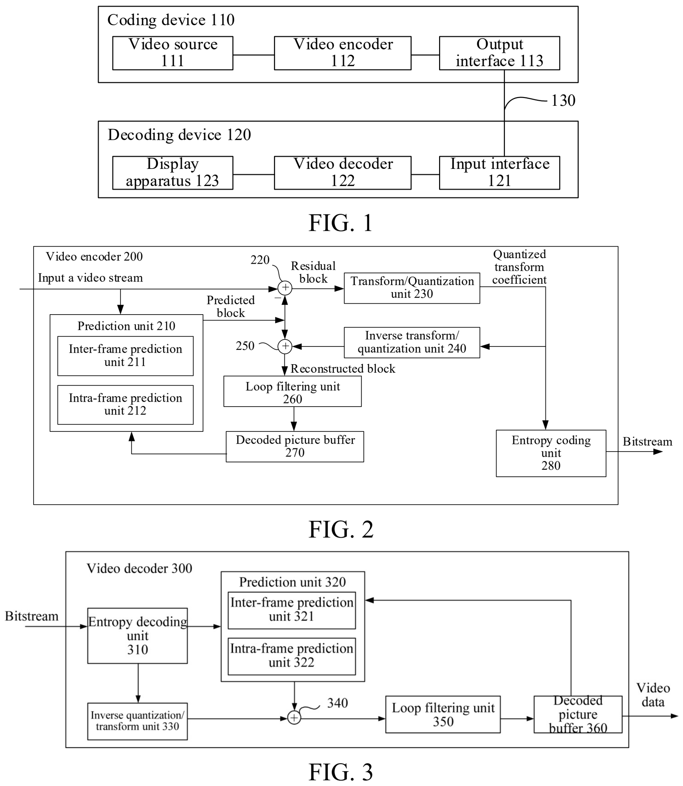

For ease of understanding, a video coding and decoding system in the embodiments of this application is first described with reference to FIG. 1.

FIG. 1 is a schematic block diagram of a video coding and decoding system according to an embodiment of this application. FIG. 1 is merely an example, and the video coding and decoding system according to this embodiment of this application includes but is not limited to that shown in FIG. 1. As shown in FIG. 1, the video coding and decoding system 100 includes a coding device 110 and a decoding device 120. The coding device is configured to: code (which may be understood as compressing) video data to generate a bitstream, and transmit the bitstream to the decoding device. The decoding device decodes the bitstream generated by the coding device through coding, to obtain decoded video data.

In the embodiments of the present disclosure including the embodiments of both the claims and the specification (hereinafter referred to as "all embodiments of the present disclosure"), the coding device 110 may be understood as a device having a video coding function, and the decoding device 120 may be understood as a device having a video decoding function. In other words, in all embodiments of the present disclosure, the coding device 110 and the decoding device 120 include a wider range of apparatuses, for example, a smartphone, a desktop computer, a mobile computing apparatus, a notebook (for example, laptop) computer, a tablet computer, a set-top box, a television, a camera, a display apparatus, a digital media player, a video game console, and an in-vehicle computer.

In all embodiments of the present disclosure, the coding device 110 may transmit coded video data (for example, the bitstream) to the decoding device 120 through a channel 130. The channel 130 may include one or more media and/or apparatuses capable of transmitting the coded video data from the coding device 110 to the decoding device 120.

In an example, the channel 130 includes one or more communication media enabling the coding device 110 to directly transmit the coded video data to the decoding device 120 in real time. In this example, the coding device 110 may modulate the coded video data according to a communication standard, and transmit modulated video data to the decoding device 120. The communication medium includes a wireless communication medium, for example, a radio frequency spectrum. In all embodiments of the present disclosure, the communication medium may further include a wired communication medium, for example, one or more physical transmission lines.

In another example, the channel 130 includes a storage medium, and the storage medium may store the coded video data obtained by the coding device 110. The storage medium includes various local access data storage media such as an optical disc, a DVD, and a flash memory. In this example, the decoding device 120 may obtain the coded video data from the storage medium.

In another example, the channel 130 may include a storage server, and the storage server may store the coded video data obtained by the coding device 110. In this example, the decoding device 120 may download the stored coded video data from the storage server. In all embodiments of the present disclosure, the storage server may store the coded video data, and may transmit the coded video data to the decoding device 120, for example, a web server (for example, for a website) or a file transfer protocol (FTP) server.

In all embodiments of the present disclosure, the coding device 110 includes a video encoder 112 and an output interface 113. The output interface 113 may include a modulator/demodulator (modem) and/or a transmitter.

In all embodiments of the present disclosure, besides the video encoder 112 and the output interface 113, the coding device 110 may further include a video source 111.

The video source 111 may include at least one of a video acquisition apparatus (for example, a video camera), a video file, a video input interface, and a computer graphics system. The video input interface is configured to receive the video data from a video content provider. The computer graphics system is configured to generate the video data.

The video encoder 112 codes the video data from the video source 111, to generate the bitstream. The video data may include one or more pictures or a sequence of pictures. The bitstream includes coding information of the picture or the sequence of pictures in a bitstream form. The coding information may include coded picture data and associated data. The associated data may include a sequence parameter set (SPS), a picture parameter set (PPS), and another syntax structure. The SPS may include parameters applied to one or more sequences. The PPS may include parameters applied to one or more pictures. The syntax structure is a set of zero or more syntactic elements arranged in a specified order in the bitstream.

The video encoder 112 directly transmits the coded video data to the decoding device 120 through the output interface 113. The coded video data may alternatively be stored on the storage medium or the storage server, so that the decoding device 120 can subsequently read the coded video data.

In all embodiments of the present disclosure, the decoding device 120 includes an input interface 121 and a video decoder 122.

In all embodiments of the present disclosure, besides the input interface 121 and the video decoder 122, the decoding device 120 may further include a display apparatus 123.

The input interface 121 includes a receiver and/or a modem. The input interface 121 may receive the coded video data through the channel 130.

The video decoder 122 is configured to: decode the coded video data to obtain the decoded video data, and transmit the decoded video data to the display apparatus 123.

The display apparatus 123 displays the decoded video data. The display apparatus 123 may be integrated with the decoding device 120 or disposed outside the decoding device 120. The display apparatus 123 may include various display apparatuses, for example, a liquid crystal display (LCD), a plasma display, an organic light emitting diode (OLED) display, or another type of display apparatus.

In addition, FIG. 1 is merely an example, and the technical solution of this embodiment of this application is not limited to FIG. 1. For example, the technology of this application may also be applied to single-side video coding or single-side video decoding.

The following describes a video coding framework involved in all embodiments of the present disclosure:
FIG. 2 is a schematic block diagram of a video encoder according to an embodiment of this application. The video encoder 200 may be configured to perform lossy compression on a picture, or may be configured to perform lossless compression on a picture. Lossless compression may be visually lossless compression or mathematically lossless compression.

The video encoder 200 may be applied to picture data of a luminance chrominance (YCbCr, YUV) format. For example, a YUV ratio may be 4:2:0, 4:2:2, or 4:4:4. Y represents luminance (Luma). Cb (U) represents blue chrominance. Cr (V) represents red chrominance. U and V represent chrominance (Chroma) for describing a color and a saturation. For example, in a color format, 4:2:0 indicates that every four pixels have four luminance components and two chrominance components (YYYYCbCr), 4:2:2 indicates that every four pixels have four luminance components and four chrominance components (YYYYCbCrCbCr), and 4:4:4 indicates full-pixel display (YYYYCbCrCbCrCbCrCbCr).

For example, the video encoder 200 reads video data, and for each frame of picture in the video data, divides the frame of picture into a plurality of coding tree units (CTUs). In some examples, the CTU may be referred to as a "tree block", a "largest coding unit (LCU)", or a "coding tree block (CTB)". Each CTU may be associated with a pixel block of a same size in the picture. Each pixel may correspond to one luminance (or luma) sample and two chrominance (or chroma) samples. Therefore, each CTU may be associated with one luminance sampling block and two chrominance sampling blocks. A size of one CTU is, for example, 128×128, 64×64, or 32×32. One CTU may be further divided into several coding units (CUs) for coding. The CU may be a rectangular block or a square block. The CU may be further divided into a prediction unit (PU) and a transform unit (TU). Therefore, coding, prediction, and transform are separated, ensuring higher processing flexibility. In an example, the CTU is divided into the CUs in a quadtree mode, and the CU is divided into the TU and the PU in the quadtree mode.

The video encoder and a video decoder may support various PU sizes. If a size of a specific CU is 2N×2N, the video encoder and the video decoder may support a PU size of 2N×2N or N×N for intra-frame prediction, and support a symmetric PU of 2N×2N, 2N×N, N×2N, N×N, or a similar size for inter-frame prediction. The video encoder and the video decoder may also support an asymmetric PU of 2N×nU, 2N×nD, nL×2N, and nR×2N for inter-frame prediction.

In all embodiments of the present disclosure, as shown in FIG. 2, the video encoder 200 may include a prediction unit 210, a residual unit 220, a transform/quantization unit 230, an inverse transform/quantization unit 240, a reconstruction unit 250, a loop filtering unit 260, a decoded picture buffer 270, and an entropy coding unit 280. The video encoder 200 may include more, fewer, or different functional components.

In all embodiments of the present disclosure, a current block may be referred to as a current coding unit (CU), a current prediction unit (PU), or the like. The prediction block may also be referred to as a predicted picture block or a picture prediction block. A reconstructed picture block may also be referred to as a reconstructed block or a picture reconstruction picture block.

In all embodiments of the present disclosure, the prediction unit 210 includes an inter-frame prediction unit 211 and an intra-frame prediction unit 212. Because there is a strong correlation between adjacent pixels in a frame of a video, an intra-frame prediction method is used in a video coding and decoding technology to eliminate space redundancy between the adjacent pixels. Because there is a strong similarity between adjacent frames in the video, an inter-frame prediction method is used in the video coding and decoding technology to eliminate temporal redundancy between the adjacent frames. Therefore, coding efficiency is improved.

The inter-frame prediction unit 211 may be configured for inter-frame prediction. Inter-frame prediction may include motion estimation and motion compensation. Motion estimation may search a reference picture in a reference picture list, for a reference block of a to-be-coded picture block. Motion estimation may generate an index indicating the reference block and a motion vector indicating a spatial displacement between the to-be-coded picture block and the reference block. Motion estimation may output the index of the reference block and the motion vector as motion information of the to-be-coded picture block. Motion compensation may obtain prediction information of the to-be-coded picture block based on the motion information of the to-be-coded picture block. Inter-frame prediction may be performed with reference to picture information of different frames. Inter-frame prediction finds the reference block from a reference frame by using the motion information, and generates a predicted block based on the reference block, to eliminate temporal redundancy. A frame used in inter-frame prediction may be a P frame and/or a B frame. The P frame is a forward predicted frame, and the B frame is a bidirectional predicted frame. Inter-frame prediction finds the reference block from the reference frame by using the motion information, and generates the predicted block based on the reference block. The motion information includes a reference frame list in which the reference frame is located, a reference frame index, and the motion vector. The motion vector may be a full-pixel motion vector or a sub-pixel motion vector. If the motion vector is the full-pixel motion vector, a required sub-pixel block needs to be generated in the reference frame through interpolation filtering. A full-pixel or sub-pixel block in the reference frame found based on the motion vector is referred to as the reference block herein. In some technologies, the reference block is directly used as the predicted block. In some technologies, the predicted block is generated by processing the reference block. Generating the predicted block by processing the reference block may also be understood as using the reference block as a predicted block and then generating a new predicted block by processing the predicted block.

The intra-frame prediction unit 212 predicts pixel information in the currently coded picture block with reference to only information about a same frame of picture, to eliminate space redundancy. The frame used for intra-frame prediction may be an I frame.

There are a plurality of prediction modes for intra-frame prediction. The H series of the international digital video coding standard is used as an example. The H.264/AVC standard has eight angle prediction modes and one non-angle prediction mode, and H.265/HEVC extends to 33 angle prediction modes and two non-angle prediction modes. Intra-frame prediction modes used by HEVC include a planar mode, DC, and 33 angle modes, a total of 35 prediction modes. Intra-frame modes used in by VVC include planar, DC, and 65 angle modes, a total of 67 prediction modes.

With more angle modes, intra-frame prediction is more accurate, and better conforms to requirements for development of high-definition and ultra-high-definition digital videos.

The residual unit 220 may generate a residual block of the CU based on the pixel block of the CU and a predicted block of the PU of the CU. For example, the residual unit 220 may generate the residual block of the CU, so that each sample in the residual block has a value equal to a difference between the following: a sample in the pixel block of the CU, and a corresponding sample in the predicted block of the PU of the CU.

The transform/quantization unit 230 may quantize a transform coefficient. The transform/quantization unit 230 may quantize, based on a quantization parameter (QP) value associated with the CU, a transform coefficient associated with the TU of the CU. The video encoder 200 may adjust, by adjusting the QP value associated with the CU, a quantization degree applied to the transform coefficient associated with the CU. For example, a residual video signal is transformed to a transform domain through transform operations such as DFT and DCT, to obtain the transform coefficient. A lossy quantization operation is further performed on a signal in the transform domain, and some information is lost, so that a quantized signal is conducive to compressed expression. In some video coding standards, two or more transform modes may be selected. Therefore, an encoder side also needs to select one of the transform modes for the currently coded CU, and inform a decoder side. Fineness of quantization is generally determined by a quantization parameter (QP). A larger value of the QP indicates that coefficients in a larger value range are to be quantized into the same output, which may generally bring a greater distortion and a low bit rate. On the contrary, a small value of the QP indicates that coefficients in a small value range are to be quantized into the same output, which may generally bring a low distortion and corresponds to a high bit rate.

The inverse transform/quantization unit 240 may apply inverse quantization and inverse transform to a quantized transform coefficient, to reconstruct the residual block based on the quantized transform coefficient.

The reconstruction unit 250 may add a sample of a reconstructed residual block to a corresponding sample of one or more predicted blocks generated by the prediction unit 210, to generate a reconstructed picture block associated with the TU. By reconstructing a sample block of each TU of the CU in this mode, the video encoder 200 can reconstruct the pixel block of the CU.

The loop filtering unit 260 is configured to process an inversely transformed and inversely quantized pixel to compensate for distortion information, to provide a better reference for a subsequently coded pixel. For example, a deblocking filtering operation may be performed to reduce a blocking effect of the pixel block associated with the CU. From the above, operations of inverse quantization, inverse transform, and predictive compensation may be performed on a picture that has been coded, to obtain a reconstructed decoded picture. Compared with the original picture, due to impact of quantization on the reconstructed picture, some information is different from that of the original picture, resulting in a distortion. Therefore, a filtering operation may be performed on the reconstructed picture, for example, by using filters such as a deblocking filter (DBF), a sample adaptive offset (SAO) filter, or an adaptive loop filter (ALF), which can effectively reduce a degree of the distortion caused by quantization. Because these filtered reconstructed pictures are used as references for subsequently coded pictures to predict future signals, the foregoing filtering operation is also referred to as loop filtering and a filtering operation within a coding loop.

The decoded picture buffer 270 may store the reconstructed pixel block. The inter-frame prediction unit 211 may perform inter-frame prediction on a PU of another picture by using the reference picture including the reconstructed pixel block. In addition, the intra-frame prediction unit 212 may perform intra-frame prediction on another PU in the same picture as the CU by using the reconstructed pixel block in the decoded picture buffer 270.

The entropy coding unit 280 may receive the quantized transform coefficient from the transform/quantization unit 230. The entropy coding unit 280 may perform one or more entropy coding operations on the quantized transform coefficient, to generate entropy coded data. For example, statistical compression coding is performed on the quantized signal in the transform domain based on a frequency of occurrence of each value, and finally, a binarized (0 or 1) compressed bitstream is outputted. In addition, entropy coding also needs to be performed on other information generated through coding, such as a selected mode and the motion vector, to reduce a bit rate. In an example, statistical coding may be used, which is a lossless coding mode in which a bit rate required for expressing a same signal can be effectively reduced. Common statistical coding modes include variable length coding (VLC) or content adaptive binary arithmetic coding (CABAC).

FIG. 3 is a schematic block diagram of a video decoder according to an embodiment of this application.

As shown in FIG. 3, the video decoder 300 includes an entropy decoding unit 310, a prediction unit 320, an inverse quantization/transform unit 330, a reconstruction unit 340, a loop filtering unit 350, and a decoded picture buffer 360. The video decoder 300 may include more, fewer, or different functional components.

The video decoder 300 may receive a bitstream. The entropy decoding unit 310 may parse the bitstream to extract a syntactic element from the bitstream. As a part of parsing the bitstream, the entropy decoding unit 310 may parse an entropy coded syntactic element in the bitstream. The prediction unit 320, the inverse quantization/transform unit 330, the reconstruction unit 340, and the loop filtering unit 350 may decode video data based on the syntactic element extracted from the bitstream, that is, generate decoded video data.

In all embodiments of the present disclosure, the prediction unit 320 includes an intra-frame prediction unit 322 and an inter-frame prediction unit 321.

The intra-frame prediction unit 322 may perform intra-frame prediction to generate a predicted block of a PU. The intra-frame prediction unit 322 may use an intra-frame prediction mode to generate the predicted block of the PU based on a pixel block of a spatially adjacent PU. The intra-frame prediction unit 322 may further determine the intra-frame prediction mode for the PU based on one or more syntactic elements obtained by parsing the bitstream.

The inter-frame prediction unit 321 may construct a first reference picture list (list 0) and a second reference picture list (list 1) based on the syntactic element obtained by parsing the bitstream. In addition, if inter-frame predictive coding is used for the PU, the entropy decoding unit 310 may obtain motion information of the PU through parsing. The inter-frame prediction unit 321 may determine one or more reference blocks of the PU based on the motion information of the PU. The inter-frame prediction unit 321 may generate the predicted block of the PU based on the one or more reference blocks of the PU.

The inverse quantization/transform unit 330 may inversely quantize (that is, dequantize) a transform coefficient associated with a TU. The inverse quantization/transform unit 330 may determine a quantization degree by using a QP value associated with a CU of the TU.

After the transform coefficient is inversely quantized, the inverse quantization/transform unit 330 may apply one or more inverse transforms to an inversely quantized transform coefficient, to generate a residual block associated with the TU.

The reconstruction unit 340 reconstructs a pixel block of the CU by using the residual block associated with the TU of the CU and the predicted block of the PU of the CU. For example, the reconstruction unit 340 may add a sample of the residual block to a corresponding sample of the predicted block, to reconstruct the pixel block of the CU to obtain a reconstructed picture block.

The loop filtering unit 350 may perform a deblocking filtering operation to reduce a blocking effect of the pixel block associated with the CU.

The video decoder 300 may store a reconstructed picture of the CU in the decoded picture buffer 360. The video decoder 300 may use the reconstructed picture in the decoded picture buffer 360 as a reference picture for subsequent prediction, or transmit the reconstructed picture to a display apparatus for presentation.

A basic procedure of video coding and decoding is as follows: On an encoder side, a frame of picture is divided into blocks, and for a current block, the prediction unit 210 generates a predicted block of the current block by using intra-frame prediction or inter-frame prediction. The residual unit 220 may calculate a residual block based on the predicted block and an original block of the current block, that is, a difference between the predicted block and the original block of the current block. The residual block may also be referred to as residual information. Transform, quantization, and the like are performed on the residual block by using the transform/quantization unit 230, so that information insensitive to human eyes can be removed, to remove visual redundancy. In all embodiments of the present disclosure, the residual block that is not transformed and quantized by the transform/quantization unit 230 may be referred to as a time domain residual block, and a time domain residual block obtained by the transform/quantization unit 230 through transform and quantization may be referred to as a frequency residual block or a frequency domain residual block. The entropy coding unit 280 receives a quantized transform coefficient outputted by the transform/quantization unit 230, and may perform entropy coding on the quantized transform coefficient, to output a bitstream. For example, the entropy coding unit 280 may eliminate character redundancy based on a target context model and probability information of the binary bitstream.

On a decoder side, the entropy decoding unit 310 may parse a bitstream to obtain prediction information of a current block, a quantization coefficient matrix, and the like. The prediction unit 320 performs intra-frame prediction or inter-frame prediction on the current block based on the prediction information, to generate a predicted block of the current block. The inverse quantization/transform unit 330 uses the quantization coefficient matrix obtained from the bitstream, and performs inverse quantization and inverse transform on the quantization coefficient matrix to obtain a residual block. The reconstruction unit 340 adds the predicted block and the residual block to obtain a reconstructed block. The reconstructed block forms a reconstructed picture. The loop filtering unit 350 performs loop filtering on the reconstructed picture based on a picture or based on a block, to obtain a decoded picture. The encoder side also needs to perform an operation similar to that of the decoder side, to obtain a decoded picture. The decoded picture may also be referred to as a reconstructed picture. The reconstructed picture may be used as a reference frame for inter-frame prediction of a subsequent frame.

Block division information determined by the encoder side, mode information or parameter information of prediction, transform, quantization, entropy coding, loop filtering, and the like, and other information are carried in the bitstream when necessary. The decoder side parses the bitstream, and analyzes existing information to determine block division information, mode information or parameter information of prediction, transform, quantization, entropy coding, loop filtering, and the like, and other information that are the same as those of the encoder side. Therefore, it is ensured that the decoded picture obtained by the encoder side is the same as the decoded picture obtained by the decoder side.

The foregoing is a basic procedure of a video codec in a block-based hybrid coding framework. With the development of technologies, some modules or steps of the framework or the procedure may be optimized. This application is applicable to the basic procedure of the video codec in the block-based hybrid coding framework, but is not limited to the framework and the procedure.

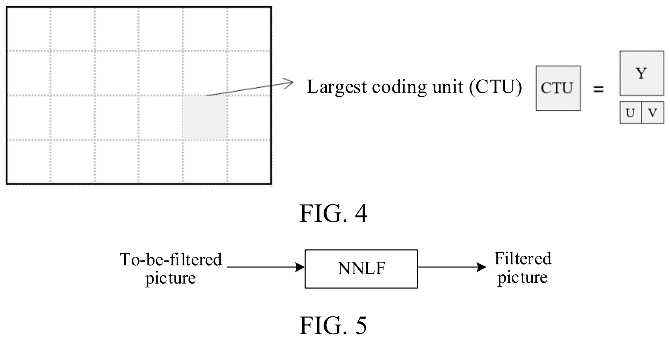

In an existing hybrid coding framework, each frame of picture in a video is usually first divided into units of a specific size, and then a subsequent coding and decoding process is performed. As shown in FIG. 4, a largest coding unit (CTU) is a basic coding unit in the hybrid coding framework, and usually includes two parts: luminance Y and chrominance UV. Because a U component and a V component in the chrominance have similar characteristics, the U component and the V component are usually sequentially processed in order of U first and then V by using a same coding parameter, to correspondingly obtain coding results of U and V.

The existing hybrid coding framework uses a conventional loop filter to suppress a distortion of a reconstructed picture and improve quality of the reconstructed picture, and expects to restore the coded reconstructed picture to an original picture. However, the conventional loop filter is manually designed, it is difficult to effectively reduce the distortion of the reconstructed picture, and there is large optimization space. Because a deep learning tool has excellent performance in picture processing, a deep learning-based loop filter is applied to a loop filter module.

A main technology in this application is a neural network loop filter (NNLF). As shown in FIG. 5, a to-be-filtered picture that is not filtered is inputted into a trained filter, to obtain a filtered augmented picture.

In a training process, a neural network usually uses a loss function to constrain a filtered picture, so that the picture is restored to an original picture as much as possible. The loss function measures a difference between a filtered value and a true value. A larger loss value indicates a greater difference, and a training target is to reduce the loss. For a deep learning-based coding tool, for example, a common loss function includes an L1 norm loss function, an L2 norm loss function, and a smooth L1 loss function.

In an actual training process, a neural network filter usually uses data augmentation modes such as rotation, flipping, and downsampling to augment training set samples, improving a generalization capability of the model. In an actual application or test process, the neural network filter does not perform operations such as flipping, rotation, and downsampling on a to-be-processed input picture, but directly inputs the to-be-processed input picture into the network.

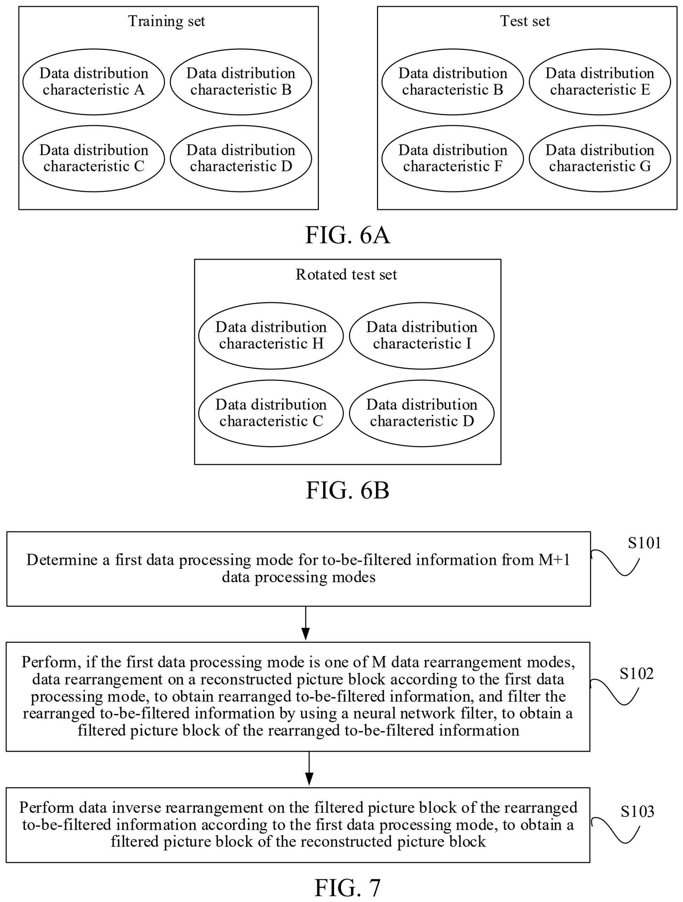

In a development process of the neural network filter, the neural network filter is trained on a training set first, a network parameter is fixed when training is completed, and then a neural network filter with the fixed parameter is tested on a test set, to verify coding performance of the tool. Ideally, if data distribution of the test set is completely consistent with that of the training set, the neural network filter can obtain the best coding performance on the test set. However, in actual neural network-based video coding, picture content of the test set is not completely the same as picture content of the training set, and there is a difference between a data distribution characteristic of the picture content of the test set and a data distribution characteristic of the picture content of the training set. As shown in FIG. 6, the data distribution characteristic of the picture content included in the training set is a data distribution characteristic A, a data distribution characteristic B, a data distribution characteristic C, a data distribution characteristic D, and the like, and the data distribution characteristic of the picture content included in the test set is the data distribution characteristic B, a data distribution characteristic E, a data distribution characteristic F, a data distribution characteristic G, and the like. Because both the training set and the test set include picture content with the data distribution characteristic B, for to-be-filtered information of the picture content with the data distribution characteristic B, the neural network filter can achieve an ideal filtering effect. However, for to-be-filtered information of picture content with the data distribution characteristic E, the data distribution characteristic F, and the data distribution characteristic G, because the training set does not include these data distribution characteristics, the neural network filter does not learn these data distribution characteristics well, and consequently, a filtering effect of the picture content with these data distribution characteristics is not ideal.

In this application, research shows that when data rearrangement such as processing of rotation and flipping is performed on picture content, a data distribution characteristic of the picture content may be changed. For example, after picture content in a test set shown in FIG. 6A is rotated, a test set shown in FIG. 6B may be obtained. Compared with that of the test set shown in FIG. 6A, a data distribution characteristic of the test set is closer to the data distribution characteristic of the training set.

Based on this, to resolve the technical problem, in all embodiments of the present disclosure, data rearrangement is performed on the to-be-filtered information inputted by the neural network filter, to make the data distribution characteristic of the to-be-filtered information closer to the data distribution characteristic of the training set. This makes the generalization capability of the neural network filter more fully utilized, improving a picture filtering effect and picture coding and decoding performance. Specifically, a first data processing mode for the to-be-filtered information is determined from M+1 data processing modes. The M+1 data processing modes include a data non-rearrangement mode and M data rearrangement modes. The to-be-filtered information includes a to-be-filtered reconstructed picture block. The reconstructed picture block is a constructed picture or a partial region of a reconstructed picture. M is a positive integer. If the first data processing mode is one of the M data rearrangement modes, data rearrangement is performed on the reconstructed picture block in the to-be-filtered information according to the first data processing mode, to obtain rearranged to-be-filtered information, and the rearranged to-be-filtered information is filtered by using the neural network filter, to obtain a filtered picture block of the rearranged to-be-filtered information. Data inverse rearrangement is performed on the filtered picture block of the rearranged to-be-filtered information according to the first data processing mode, to obtain a filtered picture block of the reconstructed picture block. To be specific, in this application, before the to-be-filtered information is filtered, whether data rearrangement needs to be performed on the to-be-filtered information is first determined. If it is determined that data rearrangement needs to be performed, data rearrangement is performed on the reconstructed picture block in the to-be-filtered information in the first data processing mode, so that a data distribution characteristic of the rearranged to-be-filtered information is the same as or close to a data distribution characteristic of training data, improving a filtering effect of the neural network filter on the rearranged to-be-filtered information. Therefore, the picture filtering effect and the picture coding and decoding performance are improved.

The following describes the technical solutions of the embodiments of this application in detail by using some embodiments. The following several embodiments may be combined with each other, and same or similar concepts or processes may not be repeatedly described in some embodiments.

A picture filtering method provided in all embodiments of the present disclosure is first described by using a decoder side as an example.

FIG. 7 is a schematic flowchart of a neural network-based picture filtering method according to an embodiment of this application. This embodiment of this application is applied to the decoder or decoding device shown in FIG. 1 or FIG. 3, or may be applied to another electronic device. For ease of description, the following uses an example in which an execution body is the decoder side for description. As shown in FIG. 7, the method in this embodiment of this application includes the following operations.

S101: Determine a first data processing mode for to-be-filtered information from M+1 data processing modes.

The method in all embodiments of the present disclosure may be applied to a video decoding solution, or may be applied to video post-processing.

In all embodiments of the present disclosure, if the method is applied to the video decoding solution, when coding a current picture, an encoder side first divides the current picture into a coding block, and performs block-by-block coding by using the coding block as a coding unit. For example, for a to-be-coded current block in the current picture, a predicted value of the current block is first obtained through inter-frame and/or intra-frame prediction. Then, the encoder side obtains a residual value of the current block based on the predicted value of the current block and the current block. The encoder side transforms the residual value of the current block to obtain a transform coefficient. In an example, the encoder side does not quantize the transform coefficient of the current block, and directly codes the transform coefficient to obtain a bitstream. In another example, the encoder side quantizes the transform coefficient of the current block to obtain a quantized coefficient, and then codes the quantized coefficient to obtain a bitstream.

In a coding process, as shown in FIG. 2, the encoder side further performs inverse transform on the transform coefficient to obtain the residual value, and adds the residual value and the predicted value to obtain a reconstructed value of the current block. Based on the foregoing operation, reconstructed values of all coding blocks in the current picture may be obtained, and these reconstructed values form a reconstructed picture of the current picture. Next, to further improve quality of the reconstructed picture, the reconstructed picture is filtered to obtain a decoded picture of the current picture. In an example, the decoded picture may be stored in a decoding buffer for subsequent picture prediction.

As shown in FIG. 3, for each to-be-decoded block in the current picture, for example, a current block, after obtaining a bitstream, the decoder side decodes the bitstream to obtain a transform coefficient of the current block. In an example, if the encoder side quantizes the transform coefficient, and then performs coding, the decoder side decodes the bitstream to obtain a quantization coefficient of the current block, and then performs inverse quantization on the quantization coefficient to obtain the transform coefficient of the current block. Then, the decoder side performs inverse transform on the transform coefficient of the current block to obtain the residual value of the current block. In addition, the decoder side performs prediction to obtain the predicted value of the current block through inter-frame and/or intra-frame prediction. In this way, the predicted value and the residual value of the current block are added to obtain a reconstructed value of the current block. Based on the foregoing operations, the decoder side may determine, through decoding, a reconstructed value of each to-be-decoded block in the current picture, and these reconstructed values form a reconstructed picture of the current picture. Next, to further improve quality of the reconstructed picture, the decoder side filters the reconstructed picture to obtain a decoded picture of the current picture. In an example, the decoder side may store the decoded picture in a decoding buffer for subsequent picture prediction. In an example, the decoder side may output the decoded picture to a display device for display.

In all embodiments of the present disclosure, the to-be-filtered information includes a reconstructed picture block.

In all embodiments of the present disclosure, the picture filtering method provided in all embodiments of the present disclosure may be used for filtering at least one frame of picture in a video. To be specific, the current picture is a picture in the video.

In all embodiments of the present disclosure, the picture filtering method provided in all embodiments of the present disclosure may be used for decoding a single picture. To be specific, the current picture is a single picture, for example, is a picture generated by the electronic device.

In all embodiments of the present disclosure, the decoder side filters the reconstructed picture by using a neural network filter.

In all embodiments of the present disclosure, a data distribution characteristic may also be referred to as a data distribution feature, and is mainly a data distribution centralization tendency, data distribution discreteness, and the like of a picture. When picture content of the two pictures is different, data distribution characteristics of the two pictures may be different. For example, one picture shows that an animal A is performing an action B, and the other picture shows that the animal A is performing an action C. In this case, data distribution characteristics of the two pictures may be different. Therefore, in all embodiments of the present disclosure, if picture content of the reconstructed picture block is different from picture content of training data, a data distribution characteristic of the reconstructed picture block may be different from a data distribution characteristic of the training data. Therefore, if the reconstructed picture block is filtered by directly using the neural network filter obtained through training with the training data, a filtering effect may be non-ideal. Therefore, in all embodiments of the present disclosure, before the to-be-filtered information is filtered by using the neural network filter, whether data rearrangement needs to be performed on the reconstructed picture block in the to-be-filtered information is first determined.

In all embodiments of the present disclosure, when the reconstructed picture is filtered, the entire reconstructed picture may be directly used as a filtering unit for filtering, or the reconstructed picture may be divided into a plurality of blocks each of which is used as a filtering unit for filtering. For ease of description, in all embodiments of the present disclosure, the reconstructed picture block is used as a filtering unit, and the reconstructed picture block may be a (that is, a frame of) reconstructed picture or a partial region of the reconstructed picture.

In all embodiments of the present disclosure, if the reconstructed picture block is the partial region of the reconstructed picture, obtaining the reconstructed picture block through division includes but is not limited to the following several examples.

In a possible implementation, the reconstructed picture block includes at least one CTU of the reconstructed picture. In other words, the at least one CTU of the reconstructed picture is used as one reconstructed picture block through division.

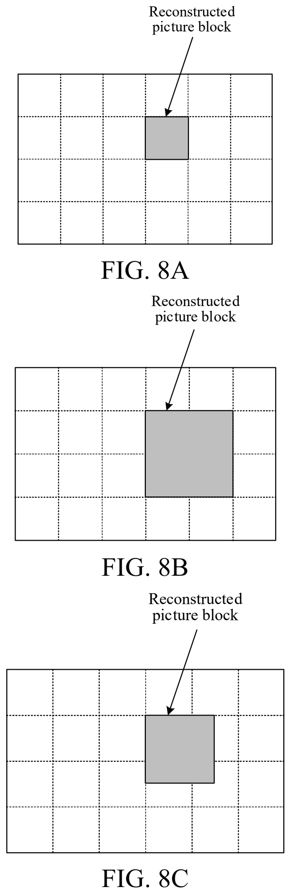

In some examples, as shown in FIG. 8A, the reconstructed picture block includes one CTU of the reconstructed picture, that is, the one CTU of the reconstructed picture is used as one reconstructed picture block through division.

In another example, as shown in FIG. 8B, the reconstructed picture block includes four CTUs of the reconstructed picture, that is, the four CTUs of the reconstructed picture are used as one reconstructed picture block through division.

In an example, a plurality of CTUs such as two CTUs or three CTUs of the reconstructed picture may be used as one reconstructed picture block through division. The plurality of CTUs may be a plurality of CTUs in a horizontal direction or a plurality of CTUs in a vertical direction. In all embodiments of the present disclosure, the plurality of CTUs may or may not be adjacent, or some of the plurality of CTUs are adjacent, and some of the plurality of CTUs are not adjacent.

In another possible implementation, the to-be-filtered reconstructed picture block is a preset picture region of the reconstructed picture. To be specific, the preset picture region of the reconstructed picture is used as the reconstructed picture block.

A specific shape and size of the preset picture region are not limited in this embodiment of this application.

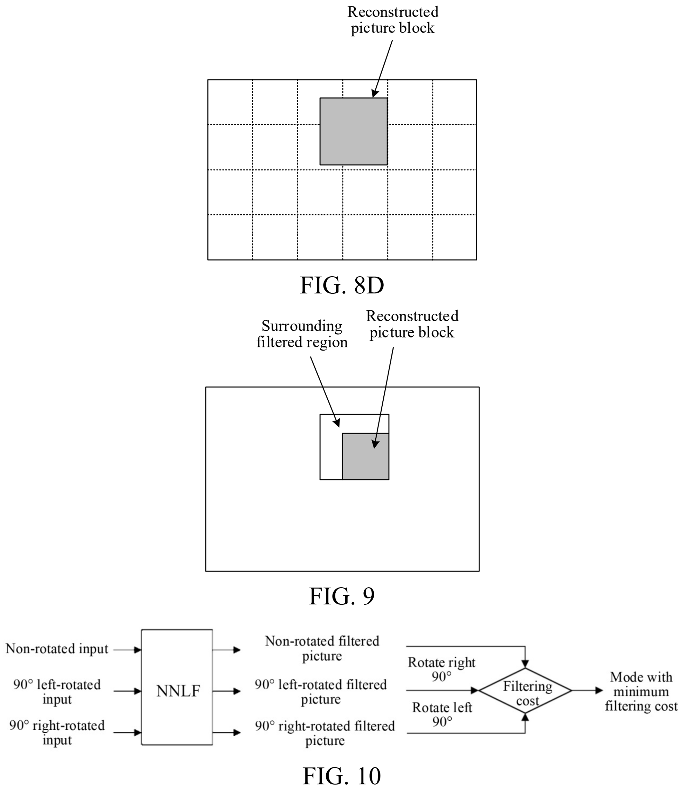

In an example, the preset picture region includes at least one incomplete CTU of the reconstructed picture, that is, the at least one missing CTU of the reconstructed picture is used as one reconstructed picture block through division. As shown in FIG. 8C, one CTU and three incomplete CTUs of the reconstructed picture are used as one reconstructed picture block through division. For another example, as shown in FIG. 8D, four incomplete CTUs of the reconstructed picture are used as one reconstructed picture block through division.

In all embodiments of the present disclosure, the preset picture region is a fixed region. For example, during each filtering process, a current to-be-filtered reconstructed picture block in the reconstructed picture is obtained based on the preset picture region. In this case, a size and a shape of a picture block inputted into the neural network filter each time are the same, and are of the preset picture region.

In all embodiments of the present disclosure, the preset picture region is a variable value. For example, during first filtering, a to-be-filtered reconstructed picture block in the reconstructed picture is obtained based on a first preset picture region, and is inputted into the neural network filter for filtering as an input picture block. During second filtering, a to-be-filtered reconstructed picture block in the reconstructed picture is obtained based on a second preset picture region, and is inputted into the neural network filter for filtering as an input picture block. The rest can be deduced by analogy. In an example of this embodiment, the decoder side may divide the reconstructed picture into a plurality of to-be-filtered reconstructed picture blocks. Shapes and sizes of the plurality of to-be-filtered reconstructed picture blocks may be the same or different, or some of the plurality of to-be-filtered reconstructed picture blocks are the same, and some of the plurality of to-be-filtered reconstructed picture blocks are different.

The following describes a process of determining the first data processing mode for the to-be-filtered information.

In all embodiments of the present disclosure, the first data processing mode is one of M+1 data processing modes, and the M+1 data processing modes include a data non-rearrangement mode and M data rearrangement modes.

The data non-rearrangement mode means that data rearrangement is not performed on the to-be-filtered information, and the to-be-filtered information is directly used as an input of the neural network filter.

The data rearrangement mode means that after data rearrangement is performed on some or all information in the to-be-filtered information according to the data rearrangement mode, rearranged to-be-filtered information is inputted into the neural network filter for filtering. Some or all information in the to-be-filtered information includes the reconstructed picture block. In other words, in all embodiments of the present disclosure, data rearrangement of the to-be-filtered information includes at least data rearrangement of the reconstructed picture block in the to-be-filtered information.

A specific type of the data rearrangement mode is not limited in this embodiment of this application.

In all embodiments of the present disclosure, the M data rearrangement modes include at least one of the following: a rotation mode, a mode of horizontal flipping and then rotation, a mode of vertical flipping and then rotation, a mode of diagonal flipping and then rotation, a mode of downsampling and then rotation, and a mode of upsampling and then rotation.

The rotation mode includes rotating left by (N*90)° and rotating right by (N*90)°, N being a positive integer. For example, information such as the reconstructed picture block is rotated left or right by 90°, 180°, or 270°.

The mode of horizontal flipping and then rotation includes first performing horizontal flipping and then rotating left by (N*90)°, and first performing horizontal flipping and then rotating right by (N*90)°, N being a positive integer. For example, the information such as the reconstructed picture block is first horizontally flipped and then rotated left or right by 90°, 180°, or 270°.

The mode of vertical flipping and then rotation includes first performing vertical flipping and then rotating left by (N*90)°, and first performing vertical flipping and then rotating right by (N*90)°, N being a positive integer. For example, the information such as the reconstructed picture block is first vertically flipped and then rotated left or right by 90°, 180°, or 270°.

The mode of diagonal flipping and then rotation includes first performing diagonal flipping and then rotating left by (N*90)°, and first performing diagonal flipping and then rotating right by (N*90)°, N being a positive integer. For example, the information such as the reconstructed picture block is first diagonally flipped and then rotated left or right by 90°, 180°, or 270°.

The mode of downsampling and then rotation includes first performing downsampling and then rotating left by (N*90)°, and first performing downsampling and then rotating right by (N*90)°, N being a positive integer. For example, the information such as the reconstructed picture block is first downsampled and then rotated left or right by 90°, 180°, or 270°.

The mode of upsampling and then rotation includes first performing upsampling and then rotating left by (N*90)°, and first performing upsampling and then rotating right by (N*90)°, N being a positive number. For example, the information such as the reconstructed picture block is first upsampled and then rotated left or right by 90°, 180°, or 270°.

The M data rearrangement modes in this embodiment of this application may further include another data rearrangement mode in addition to the foregoing at least one data rearrangement mode, that is, the rotation mode and the mode of first performing any other preprocessing operation and then performing rotation. This is not limited in all embodiments of the present disclosure.

In an example, the M+1 data processing modes in this embodiment of this application are shown in Table 1.

**Table 1**

| | |
|---|---|
| 0 | Data non-rearrangement mode |
| 1 | Rotate left by 90° |
| 2 | Rotate right by 90° |
| 3 | First perform horizontal flipping and then rotate left by 90° |
| 4 | First perform horizontal flipping and then rotate right by 90° |
| ... | ... |

In all embodiments of the present disclosure, before filtering the to-be-filtered information, the decoder side first determines the first data processing mode for the to-be-filtered information from the M+1 data processing modes.

A specific mode in which the decoder side determines the first data processing mode for the to-be-filtered information from the M+1 data processing modes is not limited in all embodiments of the present disclosure.

Mode 1: If the reconstructed picture block is the partial region of the reconstructed picture, a reference picture block of the reconstructed picture block is determined, and a data processing mode for the reference picture block is further inherited.

For example, if a prediction mode corresponding to the reconstructed picture block is inter-frame prediction, the reference picture block of the reconstructed picture block is determined in a reference picture of the current picture, and the data processing mode for the reference picture block is further determined as the first data processing mode for the reconstructed picture block.

For another example, if a prediction mode corresponding to the reconstructed picture block is intra-frame prediction, the reference picture block of the reconstructed picture block is determined in the reconstructed picture, and the data processing mode for the reference picture block is further determined as the first data processing mode for the reconstructed picture block.

Mode 2: If the reconstructed picture block is the partial region of the reconstructed picture and is not a first row of picture blocks of the reconstructed picture, the reconstructed picture block includes a surrounding filtered region, In this case, the first data processing mode may be determined from the M+1 data processing modes by using the surrounding filtered region of the reconstructed picture block.

For example, as shown in FIG. 9, the surrounding filtered region of the reconstructed picture block includes upper and left regions of the reconstructed picture block, and in all embodiments of the present disclosure, may further include upper-left and upper-right regions of the reconstructed picture block. Therefore, one of the M+1 data processing modes may be selected as the first data processing mode based on some or all of these regions. Specifically, the decoder side separately processes a filtered region A by using the M+1 data processing modes, to select a data processing mode with a minimum filtering cost as the first data processing mode. The filtered region A includes at least one of the upper, left, upper-left, and upper-right regions of the reconstructed picture block.

Specifically, the decoder side first does not perform data rearrangement on the filtered region A, and directly inputs the filtered region A into the neural network filter to perform filtering, to obtain a filtered picture block 0 in the data non-rearrangement mode. The filtered picture block 0 is compared with the filtered region A, to determine a filtering cost 0 corresponding to the data non-rearrangement mode.

A specific calculation mode for the filtering cost is not limited in this embodiment of this application. For example, the filtering cost may be a rate-distortion cost (RDO), or may be an approximate cost, for example, an SSD, a STAD, or a SAD.

In a possible implementation, for each of the M data rearrangement modes, the decoder side performs data rearrangement on the filtered region A by using the data rearrangement mode, and inputs the filtered region A subjected to data rearrangement into the neural network filter to perform filtering, to obtain a filtered picture block in the data rearrangement mode. After performing data inverse transform on the filtered picture block in the data rearrangement mode, the decoder side compares the filtered picture block with the filtered region A, to determine a corresponding filtering cost in the data rearrangement mode. Referring to the foregoing example, the decoder side may determine a filtering cost corresponding to each of the M data rearrangement modes. In this way, the filtering cost corresponding to the data non-rearrangement mode is compared with the filtering cost corresponding to each of the M data rearrangement modes, and the data processing mode with the minimum filtering cost is selected as the first data processing mode.

For example, as shown in FIG. 10, if the M data rearrangement modes include rotating left by 90° and rotating right by 90°, the decoder side directly inputs the filtered region A into the neural network filter, to obtain the filtered picture block 0 in the data non-rearrangement mode. The filtered picture block 0 in the data non-rearrangement mode is compared with the filtered region A, to calculate the filtering cost corresponding to the data non-rearrangement mode. Similarly, the decoder side rotates the filtered region A left by 90°, and then inputs the filtered region A into the neural network filter, to obtain a 90° left-rotated filtered picture block. Then, the decoder side rotates the 90° left-rotated filtered picture block right by 90°, to obtain a filtered picture block in the mode of rotating left by 90°. The filtered picture block in the mode of rotating left by 90° is compared with the filtered region A, to calculate a filtering cost corresponding to the mode of rotating left by 90°. Similarly, the decoder side rotates the filtered region A right by 90°, and then inputs the filtered region A into the neural network filter, to obtain a 90° right-rotated filtered picture block. Then, the 90° right-rotated filtered picture block is rotated left by 90°, to obtain a filtered picture block in the mode of rotating right by 90°. The filtered picture block in the mode of rotating right by 90° is compared with the filtered region A, to calculate a filtering cost corresponding to the mode of rotating right by 90°. The decoder side determines a data processing mode with a minimum filtering cost in the data non-rearrangement mode, the mode of rotating right by 90°, and the mode of rotating left by 90° as the first data processing mode.

In another possible implementation, the decoder side performs filtering cost calculation for the M data rearrangement modes in a preset order. Specifically, the decoder side first performs data rearrangement on the filtered region A in a first data rearrangement mode in the M data rearrangement modes, and inputs the filtered region A subjected to data rearrangement into the neural network filter to perform filtering, to obtain a first filtered picture block. Then, the decoder side performs data inverse rearrangement on the first filtered picture block in the first data rearrangement mode, to obtain a filtered picture block 1 in the first data rearrangement mode. The decoder side compares the filtered picture block 1 with the filtered region A, to determine a filtering cost 1 corresponding to the first data rearrangement mode. Next, the decoder side compares the filtering cost 1 with the filtering cost 0. If the filtering cost 1 is less than the filtering cost 0, the decoder side determines the first data rearrangement mode as the first data rearrangement mode, and does not make an attempt in a subsequent data rearrangement mode; or if the filtering cost 1 is greater than or equal to the filtering cost 0, the decoder side performs data rearrangement on the filtered region A in a second data rearrangement mode in the M data rearrangement modes, calculates a filtering cost 2 corresponding to the second data rearrangement mode, and compares the filtering cost 2 with the filtering cost 0. If the filtering cost 2 is less than the filtering cost 0, the decoder side determines the second data rearrangement mode as the first data processing mode; or if the filtering cost 2 is greater than or equal to the filtering cost 0, the decoder side performs data rearrangement on the filtered region A in a third data rearrangement mode in the M data rearrangement modes. The rest can be deduced by analogy, until all the M data rearrangement modes are traversed. If filtering costs corresponding to the M data rearrangement modes are all greater than or equal to the filtering cost 0 corresponding to the data non-rearrangement mode, the decoder side determines the data non-rearrangement mode as the first data processing mode.

Mode 3: After determining the first data processing mode, the encoder side indicates the first data processing mode to the decoder side. In this case, S101 includes the following operation S101-A:

S101-A: The decoder side determines the first data processing mode from the M+1 data processing modes by decoding the bitstream.

In all embodiments of the present disclosure, the encoder side directly indicates the first data processing mode to the decoder side, and the decoder side may obtain the first data processing mode by decoding the bitstream without a need to perform additional calculation. Therefore, calculation complexity on the decoder side is reduced, and decoding performance is improved.

In all embodiments of the present disclosure, the first data processing mode is a data processing mode with a minimum filtering cost in the M+1 data processing modes. For example, the encoder side determines a filtering cost corresponding to each of the M+1 data processing modes, and further selects the data processing mode with the minimum filtering cost as the first data processing mode.

In all embodiments of the present disclosure, the first data processing mode is any data rearrangement mode in the M data rearrangement modes whose filtering cost is less than a filtering cost in the data non-rearrangement mode. For example, the encoder side first determines the filtering cost corresponding to the data non-rearrangement mode, and then determines, in a preset order from a first data rearrangement mode in the M data rearrangement modes, a filtering cost corresponding to a selected data rearrangement mode. If the filtering cost corresponding to the data rearrangement mode is less than the filtering cost corresponding to the data non-rearrangement mode, an attempt made in another data rearrangement mode is stopped, and instead, the data rearrangement mode is directly used as the first data processing mode. Therefore, a picture filtering effect is improved, data processing is reduced, and coding performance is improved.

In all embodiments of the present disclosure, an implementation of S101-A includes but is not limited to the following several modes.

Mode 1: S101-A includes S101-A-a1 and S101-A-a2.

S101-A-a1: The decoder side decodes the bitstream to obtain a first flag.

S101-A-a2: The decoder side obtains the first data processing mode from the M+1 data processing modes based on the first flag.

In Mode 1, the encoder side writes the first flag into the bitstream. The first flag is configured for indicating whether to perform data rearrangement on the to-be-filtered information during filtering. For example, if the encoder side determines that data rearrangement needs to be performed on the to-be-filtered information during filtering, the encoder side sets a value of the first flag to yes (for example, 1), and then writes the first flag into the bitstream; or if the encoder side determines that data rearrangement does not need to be performed on the to-be-filtered information during filtering, the encoder side sets a value of the first flag to no (for example, 0), and writes the first flag into the bitstream.

In this way, the decoder side decodes the bitstream to obtain the first flag, and then determines the first data processing mode based on the first flag.

For example, if the first flag indicates not to perform data rearrangement on the to-be-filtered information during filtering, for example, the value of the first flag is 0, indicating not to perform data rearrangement on the to-be-filtered information during filtering, the decoder side determines the data non-rearrangement mode as the first data processing mode.

For another example, if the first flag indicates to perform data rearrangement on the to-be-filtered information during filtering, for example, the value of the first flag is 1, indicating to perform data rearrangement on the to-be-filtered information during filtering, the decoder side continues to decode the bitstream to obtain a second flag. The second flag is configured for indicating an index of a data rearrangement mode for the to-be-filtered information. The decoder side may determine the first data processing mode from the M data rearrangement modes based on the second flag.

Specific representation forms of the first flag and the second flag are not limited in all embodiments of the present disclosure.

In an example, a correspondence between values of the first flag and the second flag and a data processing mode is shown in Table 2.

**Table 2**

| | | |
|---|---|---|
| First flag | 0 | Non-rearrangement |
| | 1 | Rearrangement |
| Second flag | 00 | Rotate left by 90° |
| | 01 | Rotate right by 90° |
| | 100 | First perform horizontal flipping and then rotate left by 90° |
| | 101 | First perform horizontal flipping and then rotate right by 90° |
| | ... | ... |

As shown in Table 2, the decoder side first decodes the bitstream to obtain the first flag. If the value of the first flag is 0, it indicates that data rearrangement does not need to be performed on the to-be-filtered information during filtering, and the decoder side determines the data non-rearrangement mode as the first data processing mode; or if the value of the first flag is 1, it indicates that data rearrangement needs to be performed on the to-be-filtered information during filtering, the bitstream is further decoded to obtain the second flag, and the first data processing mode is determined based on the value of the second flag. For example, if the value of the second flag is 00, it indicates that the first data processing mode is the mode of rotating left by 90°.

In Mode 1, the encoder side indicates the first data processing mode by using the first flag and the second flag.

Mode 2: In this mode, the encoder side may replace the first flag and the second flag with a flag, that is, a third flag. In other words, the third flag may indicate whether to perform data rearrangement on the to-be-filtered information during filtering, and may also indicate a specific data rearrangement mode. In this case, S101-A includes S101-A-b1 and S101-A-b2.

S101-A-b1: The decoder side decodes the bitstream to obtain the third flag, the third flag being configured for indicating the first data processing mode.

S101-A-b2: The decoder side determines the first data processing mode from the M+1 data processing modes based on the third flag.

In Mode 2, the encoder side directly indicates an index of the first data processing mode to the decoder side by using the third flag. Specifically, after determining the first data processing mode for the to-be-filtered information from the M+1 data processing modes, the encoder side indicates the first data processing mode to the decoder side by using the third flag. For example, if the first data processing mode is the data non-rearrangement mode, the encoder side sets the third flag to a first value (for example, 0); or if the first data processing mode is a data rearrangement mode, the encoder side sets the third flag to another value. For example, when the first data processing mode is rotating left by 90°, the value of the third flag is set to 100.

In this way, the decoder side decodes the bitstream to obtain the third flag, and then determines the first data processing mode from the M+1 data processing modes based on the value of the third flag.

A specific representation form of the third flag is not limited in all embodiments of the present disclosure.

In an example, a correspondence between the value of the third flag and a data processing mode is shown in Table 3.

**Table 3**

| | | |
|---|---|---|
| | 0 | Non-rearrangement |
| Third flag | 100 | Rotate left by 90° |
| | 101 | Rotate right by 90° |
| | 110 | First perform horizontal flipping and then rotate left by 90° |
| | 111 | First perform horizontal flipping and then rotate right by 90° |
| | ... | ... |

As shown in Table 3, the decoder side first decodes the bitstream to obtain the third flag. If the value of the third flag is 0, it indicates that data rearrangement does not need to be performed on the to-be-filtered information during filtering, and the decoder side determines the data non-rearrangement mode as the first data processing mode; if the value of the third flag is 100, it indicates that data rearrangement needs to be performed on the to-be-filtered information during filtering, and the first data processing mode is the mode of rotating left by 90°; or if the value of the third flag is 110, it indicates that the first data processing mode is the mode of first performing horizontal flipping and then rotating left by 90°. In this way, the decoder side may obtain the first data processing mode by querying Table 3 by using the value of the third flag.

If the reconstructed picture block is the reconstructed picture, the first flag, the second flag, and the third flag may be picture-level flag bits. If the reconstructed picture block is the partial region of the reconstructed picture, the first flag, the second flag, and the third flag may be block-level flag bits.

The foregoing describes a specific process in which the decoder side determines the first data processing mode for the to-be-filtered information. After determining the first data processing mode, the decoder side performs the following operation S102.

S102: Perform, if the first data processing mode is one of the M data rearrangement modes, data rearrangement on the reconstructed picture block according to the first data processing mode, to obtain rearranged to-be-filtered information, and filter the rearranged to-be-filtered information by using the neural network filter, to obtain a filtered picture block of the rearranged to-be-filtered information.

The decoder side determines the first data processing mode according to the foregoing operation. If the first data processing mode is the data non-rearrangement mode, the decoder side does not perform data rearrangement on the to-be-filtered information, but filters the to-be-filtered information by using the neural network filter, to obtain the filtered picture block of the reconstructed picture block.

If the first data processing mode is one of the M data rearrangement modes, it indicates that before the to-be-filtered information is inputted into the neural network filter, data rearrangement first needs to be performed.

**In** all embodiments of the present disclosure, the to-be-filtered information includes only the reconstructed picture block.

**In** all embodiments of the present disclosure, in addition to the reconstructed picture block, the to-be-filtered information further includes at least one of a predicted picture block corresponding to the reconstructed picture block, a boundary strength picture block, a frame type (slice type) of the reconstructed picture block, and quantization parameter information. In all embodiments of the present disclosure, the quantization parameter information includes a slice quantization parameter (QP) and a base quantization parameter (QP).

In all embodiments of the present disclosure, if the first data processing mode is a data rearrangement mode, the decoder side performs data rearrangement on the to-be-filtered information in at least the following several modes.

In a first mode, the decoder side performs data rearrangement on only the reconstructed picture block in the to-be-filtered information, and does not perform data rearrangement on other information in the to-be-filtered information. For example, the to-be-filtered information includes information such as the reconstructed picture block, the predicted picture block corresponding to the reconstructed picture block, the boundary strength picture block, the frame type of the reconstructed picture block, and the quantization parameter information. The decoder side performs data rearrangement on the reconstructed picture block in the first data processing mode, and does not perform data rearrangement on the information such as the predicted picture block corresponding to the reconstructed picture block, the boundary strength picture block, the frame type of the reconstructed picture block, and the quantization parameter information. Because the information such as the predicted picture block corresponding to the reconstructed picture block, the boundary strength picture block, the frame type of the reconstructed picture block, and the quantization parameter information is auxiliary information of the reconstructed picture block, data rearrangement may not be performed on the information. Therefore, data rearrangement pressure on the decoder side can be reduced, to improve decoding efficiency on the decoder side.

In a second mode, the decoder side performs data rearrangement on the reconstructed picture block according to the first data processing mode, and performs data rearrangement on at least one of the predicted picture block, the boundary strength picture block, the frame type, and the quantization parameter information according to the first data processing mode, to obtain the rearranged to-be-filtered information.

In an example of the second mode, the decoder side performs data rearrangement on all information in the to-be-filtered information according to the first data processing mode. For example, the first data processing mode is rotating left by 90°, and the to-be-filtered information includes information such as the reconstructed picture block, the predicted picture block corresponding to the reconstructed picture block, the boundary strength picture block, the frame type, and the quantization parameter information. In this case, the decoder side rotates all the information such as the reconstructed picture block, the predicted picture block corresponding to the reconstructed picture block, the boundary strength picture block, the frame type, and the quantization parameter information left by 90°, to obtain the rearranged to-be-filtered information.

In an example of the second mode, the decoder side performs data rearrangement on the reconstructed picture block according to the first data processing mode, performs data rearrangement on the predicted picture block according to the first data processing mode, and does not perform rearrangement on information such as the boundary strength picture block, the frame type, and the quantization parameter information, to obtain the rearranged to-be-filtered information.

In an example of the second mode, the decoder side performs data rearrangement on the reconstructed picture block according to the first data processing mode, performs data rearrangement on the boundary strength picture block according to the first data processing mode, and does not perform rearrangement on information such as the predicted picture block, the frame type, and the quantization parameter information, to obtain the rearranged to-be-filtered information.

In a third mode, the decoder side performs data rearrangement on the reconstructed picture block according to the first data processing mode, performs data rearrangement on at least one of the predicted picture block and the boundary strength picture block according to the first data processing mode, and skips performing data rearrangement on at least one of the frame type and the quantization parameter information, to obtain the rearranged to-be-filtered information.

In an example of the third mode, if the to-be-filtered information includes the reconstructed picture block, the predicted picture block of the reconstructed picture block, the boundary strength picture block, the frame type, and the quantization parameter information, the decoder side performs data rearrangement on the reconstructed picture block according to the first data processing mode, performs data rearrangement on the predicted picture block and the boundary strength picture block according to the first data processing mode, and skips performing data rearrangement (that is, does not perform data rearrangement) on the frame type and the quantization parameter information, to obtain the rearranged to-be-filtered information.

In an example of the third mode, if the to-be-filtered information includes the reconstructed picture block, the predicted picture block of the reconstructed picture block, the boundary strength picture block, the frame type, and the quantization parameter information, the decoder side performs data rearrangement on the reconstructed picture block, the predicted picture block, the boundary strength picture block, and the frame type according to the first data processing mode, and skips performing data rearrangement (that is, does not perform data rearrangement) on the quantization parameter information, to obtain the rearranged to-be-filtered information.

In an example of the third mode, if the to-be-filtered information includes the reconstructed picture block, the predicted picture block of the reconstructed picture block, the boundary strength picture block, the frame type, and the quantization parameter information, the decoder side performs data rearrangement on the reconstructed picture block, the predicted picture block, the boundary strength picture block, and the quantization parameter information according to the first data processing mode, and skips performing data rearrangement (that is, does not perform data rearrangement) on the frame type, to obtain the rearranged to-be-filtered information.

In an example of the third mode, if the to-be-filtered information includes the reconstructed picture block, the predicted picture block of the reconstructed picture block, the boundary strength picture block, the frame type, and the quantization parameter information, the decoder side performs data rearrangement on the reconstructed picture block and the predicted picture block according to the first data processing mode, and skips performing data rearrangement (that is, does not perform data rearrangement) on the boundary strength picture block, the quantization parameter information, and the frame type, to obtain the rearranged to-be-filtered information.

The decoder side uses the first data processing mode to perform data rearrangement on the reconstructed picture block in the to-be-filtered information or perform data rearrangement on the reconstructed picture block and other information in the to-be-filtered information, to obtain the rearranged to-be-filtered information. Then, the decoder side inputs the rearranged to-be-filtered information into the neural network filter, and filters the rearranged to-be-filtered information by using the neural network filter, to obtain the filtered picture block of the rearranged to-be-filtered information.

In all embodiments of the present disclosure, before filtering the to-be-filtered information, the decoder side first determines whether data rearrangement needs to be performed on the to-be-filtered information. If it is determined that data rearrangement needs to be performed, data rearrangement is performed on information such as the reconstructed picture block in the to-be-filtered information in the first data processing mode, so that a data distribution characteristic of the rearranged to-be-filtered information is the same as or close to the data distribution characteristic of the training data, improving a filtering effect of the neural network filter on the rearranged to-be-filtered information. Therefore, the picture filtering effect and the picture coding and decoding performance are improved.

S103: Perform data inverse rearrangement on the filtered picture block of the rearranged to-be-filtered information according to the first data processing mode, to obtain the filtered picture block of the reconstructed picture block.

In the foregoing operations, the decoder side performs data rearrangement on the information such as the reconstructed picture block in the to-be-filtered information, so that the neural network filter filters the rearranged to-be-filtered information to obtain the filtered picture block of the rearranged to-be-filtered information, where a data distribution characteristic of the filtered picture block of the rearranged to-be-filtered information is inconsistent with a data distribution characteristic of the to-be-filtered information. Therefore, in all embodiments of the present disclosure, after performing data rearrangement on the reconstructed picture block and the like in the to-be-filtered information in the first data processing mode, to obtain the filtered picture block of the rearranged to-be-filtered information, the decoder side further needs to perform data inverse rearrangement on the filtered picture block of the rearranged to-be-filtered information in the first data processing mode, to obtain the filtered picture block of the reconstructed picture block.

For example, the first data processing mode is rotating left by 90°. In this case, the decoder side needs to rotate the filtered picture block of the rearranged to-be-filtered information right by 90°, to obtain the filtered picture block of the reconstructed picture block.

For another example, the first data processing mode is rotating right by 90°. In this case, the decoder side needs to rotate the filtered picture block of the rearranged to-be-filtered information left by 90°, to obtain the filtered picture block of the reconstructed picture block.

In all embodiments of the present disclosure, the reconstructed picture block includes at least one of a reconstructed picture block for a Y component, a reconstructed picture block for a U component, and a reconstructed picture block for a V component. In other words, an adaptive data rearrangement mode in all embodiments of the present disclosure may be applied to at least one of the luminance component Y and the chrominance components U and V.

The foregoing describes a filtering process of one reconstructed picture block in the reconstructed picture. For a filtering process of another to-be-filtered reconstructed picture block in the reconstructed picture, refer to the foregoing filtering process of the reconstructed picture block. A filtered reconstructed picture is finally obtained.

In all embodiments of the present disclosure, the picture filtering method in this embodiment of this application may be applied to a video decoder, for example, applied to loop filtering, where the filtered reconstructed picture is stored in the decoding buffer for subsequent picture decoding. In this case, a filter output affects video decoding. According to the picture filtering method provided in this embodiment of this application, quality of filtering the reconstructed picture is improved, so that a video decoding effect can be improved when subsequent decoding is performed based on a reconstructed picture with good quality.

In all embodiments of the present disclosure, the picture filtering method in this embodiment of this application may be applied to a product for video post-processing, for example, applied to a display side, that is, the filtered reconstructed picture is directly displayed without being put into the decoding buffer. In this case, a filter output does not affect video decoding.

In all embodiments of the present disclosure, the picture filtering method in this embodiment of this application may be further applied to any module using a neural network in neural network-based video coding, for example, a neural network super-resolver or a neural network intra-frame prediction module, only with a need to replace the reconstructed picture block with a corresponding picture block.

According to the neural network-based picture filtering method provided in all embodiment of the present disclosure, the decoder sides determines the first data processing mode for the to-be-filtered information from the M+1 data processing modes. The M+1 data processing modes include the data non-rearrangement mode and the M data rearrangement modes. The to-be-filtered information includes the to-be-filtered reconstructed picture block. The reconstructed picture block is the constructed picture or the partial region of the reconstructed picture. M is a positive integer. If the first data processing mode is one of the M data rearrangement modes, data rearrangement is performed on the reconstructed picture block in the to-be-filtered information according to the first data processing mode, to obtain the rearranged to-be-filtered information, and the rearranged to-be-filtered information is filtered by using the neural network filter, to obtain the filtered picture block of the rearranged to-be-filtered information. Data inverse rearrangement is performed on the filtered picture block of the rearranged to-be-filtered information according to the first data processing mode, to obtain the filtered picture block of the reconstructed picture block. To be specific, in this application, before the to-be-filtered information is filtered, whether data rearrangement needs to be performed on the to-be-filtered information is first determined. If it is determined that data rearrangement needs to be performed, data rearrangement is performed on the reconstructed picture block in the to-be-filtered information in the first data processing mode, so that the data distribution characteristic of the rearranged to-be-filtered information is the same as or close to the data distribution characteristic of the training data, improving the filtering effect of the neural network filter on the rearranged to-be-filtered information. Therefore, the picture filtering effect and the picture decoding performance are improved.

The foregoing describes the picture filtering method in all embodiments of the present disclosure by using the decoder side as an example. The following describes the picture filtering method in all embodiments of the present disclosure by using an encoder side as an example.

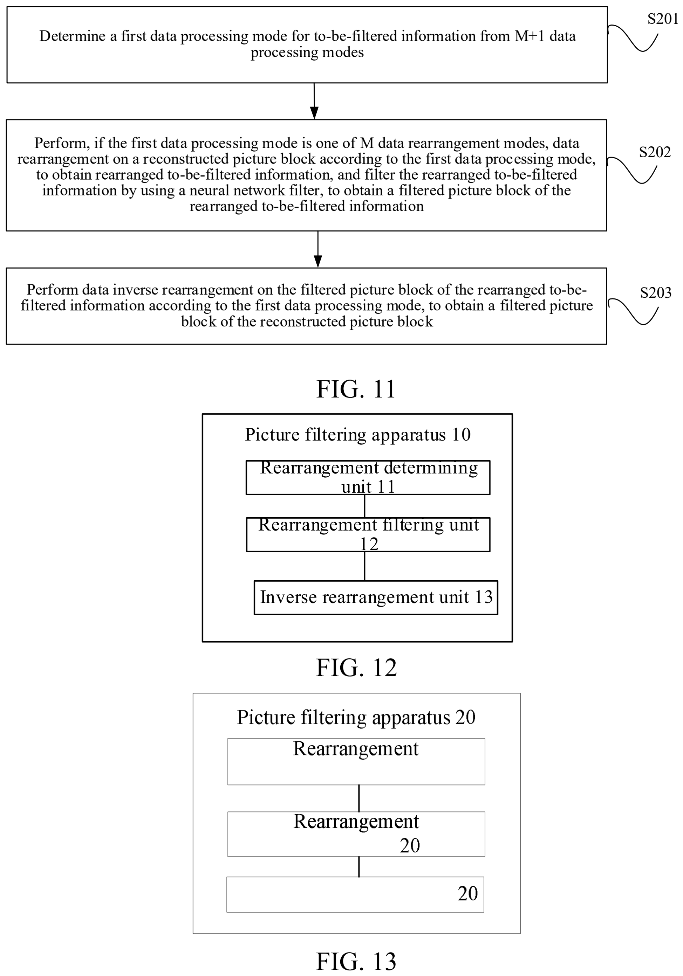

FIG. 11 is a schematic flowchart of a neural network-based picture filtering method according to an embodiment of this application. This embodiment of this application is applied to the encoder shown in FIG. 1 or FIG. 2 or another electronic device. For ease of description, the encoder is used as an example herein for description. As shown in FIG. 11, the method in this embodiment of this application includes the following operations.

S201: Determine a first data processing mode for to-be-filtered information from M+1 data processing modes.

In all embodiments of the present disclosure, when coding a current picture, an encoder side first divides the current picture into a coding block, and performs block-by-block coding by using the coding block as a coding unit. For example, for a to-be-coded current block in the current picture, a predicted value of the current block is first obtained through inter-frame and/or intra-frame prediction. Then, a residual value of the current block is obtained based on the predicted value of the current block and the current block. The encoder side transforms the residual value of the current block to obtain a transform coefficient. In an example, the encoder side does not quantize the transform coefficient of the current block, and directly codes the transform coefficient to obtain a bitstream. In another example, the encoder side quantizes the transform coefficient of the current block to obtain a quantized coefficient, and then codes the quantized coefficient to obtain a bitstream.

In a coding process, as shown in FIG. 2, the encoder side further performs inverse transform on the transform coefficient to obtain the residual value, and adds the residual value and the predicted value to obtain a reconstructed value of the current block. Based on the foregoing operation, reconstructed values of all coding blocks in the current picture may be obtained, and these reconstructed values form a reconstructed picture of the current picture. Next, to further improve quality of the reconstructed picture, the reconstructed picture is filtered to obtain a decoded picture of the current picture. In an example, the decoded picture may be stored in a decoding buffer for subsequent picture prediction.

In all embodiments of the present disclosure, the picture filtering method provided in all embodiments of the present disclosure may be used for filtering at least one frame of picture in a video. To be specific, the current picture is a picture in the video.

In all embodiments of the present disclosure, the picture filtering method provided in all embodiments of the present disclosure may be used for decoding a single picture. To be specific, the current picture is a single picture, for example, is a picture generated by the electronic device.

In all embodiments of the present disclosure, the encoder side filters the reconstructed picture by using a neural network filter.

In all embodiments of the present disclosure, a data distribution characteristic may also be referred to as a data distribution feature, and is mainly a data distribution centralization tendency, data distribution discreteness, and the like of a picture. When content of two pictures is different, data distribution characteristics of the two pictures are usually different. One picture shows that an animal A is performing an action B, and the other picture shows that the animal A is performing an action C. In this case, data distribution characteristics of the two pictures may be different. Therefore, in all embodiments of the present disclosure, if picture content of the to-be-filtered information is different from picture content of training data, a data distribution characteristic of the to-be-filtered information may be different from a data distribution characteristic of the training data. Therefore, if the to-be-filtered information is filtered by directly using a neural network filter obtained through training with the training data, a filtering effect may be non-ideal. Therefore, in all embodiments of the present disclosure, before the to-be-filtered information is filtered by using the neural network filter, whether data rearrangement needs to be performed on a reconstructed picture block in the to-be-filtered information is first determined.

In all embodiments of the present disclosure, the to-be-filtered information includes the reconstructed picture block.

In all embodiments of the present disclosure, when filtering the reconstructed picture, the encoder side may directly use the entire reconstructed picture as a filtering unit for filtering, or may divide the reconstructed picture into a plurality of blocks each of which is used as a filtering unit for filtering. For ease of description, in all embodiments of the present disclosure, the reconstructed picture block is used as a filtering unit, and the reconstructed picture block may be a (that is, a frame of) reconstructed picture or a partial region of the reconstructed picture.

In all embodiments of the present disclosure, if the reconstructed picture block is the partial region of the reconstructed picture, obtaining the reconstructed picture block through division includes but is not limited to the following several examples.

In a possible implementation, the reconstructed picture block includes at least one CTU of the reconstructed picture. In other words, the encoder side uses the at least one CTU of the reconstructed picture as one reconstructed picture block through division.

In some examples, as shown in FIG. 8A, the reconstructed picture block includes one CTU of the reconstructed picture, that is, the encoder side uses the one CTU of the reconstructed picture as one reconstructed picture block through division.

In another example, as shown in FIG. 8B, the reconstructed picture block includes four CTUs of the reconstructed picture, that is, the encoder side uses the four CTUs of the reconstructed picture as one reconstructed picture block through division.

In an example, the encoder side uses a plurality of CTUs such as two CTUs or three CTUs of the reconstructed picture as one reconstructed picture block through division. The plurality of CTUs may be a plurality of CTUs in a horizontal direction or a plurality of CTUs in a vertical direction. In all embodiments of the present disclosure, the plurality of CTUs may or may not be adjacent, or some of the plurality of CTUs are adjacent, and some of the plurality of CTUs are not adjacent.

In another possible implementation, the to-be-filtered reconstructed picture block is a preset picture region of the reconstructed picture. To be specific, the preset picture region of the reconstructed picture is used as the reconstructed picture block.

A specific shape and size of the preset picture region are not limited in all embodiments of the present disclosure.

In an example, the preset picture region includes at least one incomplete CTU of the reconstructed picture, that is, the at least one missing CTU of the reconstructed picture is used as one reconstructed picture block through division. As shown in FIG. 8C, the encoder side uses one CTU and three incomplete CTUs of the reconstructed picture as one reconstructed picture block through division. For another example, as shown in FIG. 8D, the encoder side uses four incomplete CTUs of the reconstructed picture as one reconstructed picture block through division.

In all embodiments of the present disclosure, the preset picture region is a fixed region. For example, during each filtering process, the encoder side obtains a current to-be-filtered reconstructed picture block in the reconstructed picture based on the preset picture region. In this case, a size and a shape of a picture block inputted into the neural network filter each time are the same, and are of the preset picture region.

In all embodiments of the present disclosure, the preset picture region is a variable value. For example, during first filtering, the encoder side obtains a to-be-filtered reconstructed picture block in the reconstructed picture based on a first preset picture region, and inputs the to-be-filtered reconstructed picture block into the neural network filter for filtering as an input picture block. During second filtering, a to-be-filtered reconstructed picture block in the reconstructed picture is obtained based on a second preset picture region, and is inputted into the neural network filter for filtering as an input picture block. The rest can be deduced by analogy. In an example of this embodiment, a decoder side may divide the reconstructed picture into a plurality of to-be-filtered reconstructed picture blocks. Shapes and sizes of the plurality of to-be-filtered reconstructed picture blocks may be the same or different, or some of the plurality of to-be-filtered reconstructed picture blocks are the same, and some of the plurality of to-be-filtered reconstructed picture blocks are different.

The following describes a process of determining the first data processing mode for the to-be-filtered information.

In all embodiments of the present disclosure, the first data processing mode is one of M+1 data processing modes, and the M+1 data processing modes include a data non-rearrangement mode and M data rearrangement modes.

The data non-rearrangement mode means that data rearrangement is not performed on the to-be-filtered information, and the to-be-filtered information is directly used as an input of the neural network filter.

The data rearrangement mode means that after data rearrangement is performed on some or all information in the to-be-filtered information according to the data rearrangement mode, rearranged to-be-filtered information is inputted into the neural network filter for filtering. Some or all information in the to-be-filtered information includes the reconstructed picture block. In other words, in all embodiments of the present disclosure, data rearrangement of the to-be-filtered information includes at least data rearrangement of the reconstructed picture block in the to-be-filtered information.

A specific type of the data rearrangement mode is not limited in all embodiments of the present disclosure.

In all embodiments of the present disclosure, the M data rearrangement modes include at least one of the following: a rotation mode, a mode of horizontal flipping and then rotation, a mode of vertical flipping and then rotation, a mode of diagonal flipping and then rotation, a mode of downsampling and then rotation, and a mode of upsampling and then rotation.

The rotation mode includes rotating left by (N*90)° and rotating right by (N*90)°, N being a positive number.

The mode of horizontal flipping and then rotation includes first performing horizontal flipping and then rotating left by (N*90)°, and first performing horizontal flipping and then rotating right by (N*90)°, N being a positive integer.

The mode of vertical flipping and then rotation includes first performing vertical flipping and then rotating left by (N*90)°, and first performing vertical flipping and then rotating right by (N*90)°, N being a positive integer.

The mode of diagonal flipping and then rotation includes first performing diagonal flipping and then rotating left by (N*90)°, and first performing diagonal flipping and then rotating right by (N*90)°, N being a positive integer.

The mode of downsampling and then rotation includes first performing downsampling and then rotating left by (N*90)°, and first performing downsampling and then rotating right by (N*90)°, N being a positive integer.

The mode of upsampling and then rotation includes first performing upsampling and then rotating left by (N*90)°, and first performing upsampling and then rotating right by (N*90)°, N being a positive integer.

The M data rearrangement modes in all embodiments of the present disclosure may further include another data rearrangement mode in addition to the foregoing at least one data rearrangement mode, that is, the rotation mode and the mode of first performing any other preprocessing operation and then performing rotation. This is not limited in all embodiments of the present disclosure.

In an example, the M+1 data processing modes in all embodiments of the present disclosure are shown in Table 1.

In all embodiments of the present disclosure, before filtering the to-be-filtered information, the encoder side first determines the first data processing mode for the to-be-filtered information from the M+1 data processing modes.

A specific mode in which the encoder side determines the first data processing mode for the to-be-filtered information from the M+1 data processing modes is not limited in all embodiments of the present disclosure.

Mode 1: If the reconstructed picture block is the partial region of the reconstructed picture, the encoder side determines a reference picture block of the reconstructed picture block, and a data processing mode for the reference picture block is further inherited.

For example, if a prediction mode corresponding to the reconstructed picture block is inter-frame prediction, the encoder side determines the reference picture block of the reconstructed picture block in a reference picture of the current picture, and further determines the data processing mode for the reference picture block as the first data processing mode for the reconstructed picture block.

For another example, if a prediction mode corresponding to the reconstructed picture block is intra-frame prediction, the encoder side determines the reference picture block of the reconstructed picture block in the reconstructed picture, and further determines the data processing mode for the reference picture block as the first data processing mode for the reconstructed picture block.

Mode 2: S201 includes the following operations S201-A1 and S201-A2.

S201-A1: The encoder side determines filtering costs respectively corresponding to the M+1 data processing modes.

S201-A2: The encoder side determines a data processing mode with a minimum filtering cost in the M+1 data processing modes as the first data processing mode.

In all embodiments of the present disclosure, the encoder side determines a filtering cost corresponding to the data non-rearrangement mode in the M+1 data processing modes. Specifically, the to-be-filtered information is filtered by using the neural network filter, to obtain a filtered picture block in the data non-rearrangement mode, and the filtering cost corresponding to the data non-rearrangement mode is determined based on the filtered picture block in the data non-rearrangement mode and an original picture block of the reconstructed picture block.

A specific calculation mode for the filtering cost is not limited in all embodiments of the present disclosure. For example, the filtering cost may be a rate-distortion cost (RDO), or may be an approximate cost, for example, an SSD, a STAD, or a SAD.

In all embodiments of the present disclosure, the encoder side determines a filtering cost corresponding to each of the M data rearrangement modes in basically the same mode. For ease of description, an example of determining a filtering cost corresponding to an i^{th} data rearrangement mode is used for description.

In this case, determining filtering costs corresponding to the data rearrangement modes in S201-A1 includes the following operations S201-A1-a1 to S201-A1-a3.

S201-A1-a1: The encoder side performs, for the i^{th} data rearrangement mode in the M data rearrangement modes, data rearrangement on the reconstructed picture according to the i^{th} data rearrangement mode, and filters, by using the neural network filter, to-be-filtered information obtained through rearrangement in the i^{th} data rearrangement mode, to obtain an i^{th} filtered picture block, i being a positive integer less than or equal to M.

S201-A1-a2: The encoder side performs data inverse rearrangement on the i^{th} filtered picture block according to the i^{th} data rearrangement mode, to obtain a filtered picture block in the i^{th} data rearrangement mode.

S201-A1-a3: The encoder side determines, based on the filtered picture block in the i^{th} data rearrangement mode and the original picture block of the reconstructed picture block, the filtering cost corresponding to the i^{th} data rearrangement mode.

In all embodiments of the present disclosure, for the i^{th} data rearrangement mode in the M data rearrangement modes, data rearrangement is performed on the reconstructed picture block in the i^{th} data rearrangement mode, to obtain the to-be-filtered information obtained through rearrangement in the i^{th} data rearrangement mode. Then, the to-be-filtered information obtained through rearrangement in the i^{th} data rearrangement mode is inputted into the neural network filter to perform filtering, to obtain a filtered picture block, denoted as the i^{th} filtered picture block. Next, data inverse rearrangement is performed on the i^{th} filtered picture block according to the i^{th} data rearrangement mode, to obtain the filtered picture block in the i^{th} data rearrangement mode. Finally, the encoder side determines, based on the filtered picture block in the i^{th} data rearrangement mode and the original picture block of the reconstructed picture block, the filtering cost corresponding to the i^{th} data rearrangement mode.

For example, as shown in FIG. 10, if the M data rearrangement modes include rotating left by 90° and rotating right by 90°, the encoder side directly inputs the to-be-filtered information into the neural network filter, to obtain a filtered picture block 0 in the data non-rearrangement mode. The filtered picture block 0 in the data non-rearrangement mode is compared with the original picture block of the reconstructed picture, to calculate the filtering cost corresponding to the data non-rearrangement mode. Similarly, the encoder side rotates information such as the reconstructed picture block in the to-be-filtered information left by 90°, and then inputs the information into the neural network filter, to obtain a 90° left-rotated filtered picture block. Then, the encoder side rotates the 90° left-rotated filtered picture block right by 90°, to obtain a filtered picture block in the mode of rotating left by 90°. The encoder side compares the filtered picture block in the mode of rotating left by 90° with the original picture block of the reconstructed picture, to calculate a filtering cost corresponding to the mode of rotating left by 90°. Similarly, the encoder side rotates the information such as the reconstructed picture block in the to-be-filtered information right by 90°, and then inputs the information into the neural network filter, to obtain a 90° right-rotated filtered picture block. Then, the encoder side rotates the 90° right-rotated filtered picture block left by 90°, to obtain a filtered picture block in the mode of rotating right by 90°. The encoder side compares the filtered picture block in the mode of rotating right by 90° with the original picture block of the reconstructed picture, to calculate a filtering cost corresponding to the mode of rotating right by 90°. The encoder side determines a data processing mode with a minimum filtering cost in the data non-rearrangement mode, the mode of rotating right by 90°, and the mode of rotating left by 90° as the first data processing mode.

Mode 3: S201 includes the following operations S201-B1 and S201-B2.

S201-B1: The encoder side determines a filtering cost corresponding to the data non-rearrangement mode in the M+1 data processing modes.

S201-B2: The encoder side determines, from the M data rearrangement modes in a preset sequence, a first data rearrangement mode whose filtering cost is less than the filtering cost corresponding to the data non-rearrangement mode as the first data processing mode.

For a process in which the encoder side determines the filtering cost corresponding to the data non-rearrangement mode in the M+1 data processing modes, refer to the descriptions of the foregoing operations, and details are not described herein again.

In all embodiments of the present disclosure, the encoder side first determines the filtering cost corresponding to the data non-rearrangement mode, and then performs filtering cost calculation for the M data rearrangement modes in a preset order. Specifically, data rearrangement is first performed on information such as the reconstructed picture block in the to-be-filtered information in a first data rearrangement mode in the M data rearrangement modes, and then the information is inputted into the neural network filter to perform filtering, to obtain a first filtered picture block. Then, data inverse rearrangement is performed on the first filtered picture block in the first data rearrangement mode, to obtain a filtered picture block 1 in the first data rearrangement mode. The filtered picture block 1 is compared with an original picture block of the reconstructed picture block, to determine a filtering cost 1 corresponding to the first data rearrangement mode. Next, the filtering cost 1 is compared with the filtering cost corresponding to the data non-rearrangement mode. If the filtering cost 1 is less than the filtering cost corresponding to the data non-rearrangement mode, the first data rearrangement mode is determined as the first data rearrangement mode, and an attempt is not made in a subsequent data rearrangement mode; or if the filtering cost 1 is greater than or equal to the filtering cost corresponding to the data non-rearrangement mode, data rearrangement is performed on the information such as the reconstructed picture block in the to-be-filtered information in a second data rearrangement mode in the M data rearrangement modes, a filtering cost 2 corresponding to the second data rearrangement mode is calculated, and the filtering cost 2 is compared with the filtering cost corresponding to the data non-rearrangement mode. If the filtering cost 2 is less than the filtering cost corresponding to the data non-rearrangement mode, the second data rearrangement mode is determined as the first data processing mode; or if the filtering cost 2 is greater than or equal to the filtering cost corresponding to the data non-rearrangement mode, data rearrangement is performed on the information such as the reconstructed picture block in the to-be-filtered information in a third data rearrangement mode in the M data rearrangement modes. The rest can be deduced by analogy, until all the M data rearrangement modes are traversed.

In all embodiments of the present disclosure, if filtering costs corresponding to the M data rearrangement modes are all greater than or equal to the filtering cost corresponding to the data non-rearrangement mode, the encoder side determines the data non-rearrangement mode as the first data processing mode.

In Mode 2 and Mode 3, a mode in which the encoder side rearranges the information such as the reconstructed picture block in the to-be-filtered information according to the i^{th} data rearrangement mode, to obtain the rearranged to-be-filtered information includes at least the following several modes.

Mode 1: If the to-be-filtered information includes, in addition to the reconstructed picture block, at least one of a predicted picture block corresponding to the reconstructed picture block, a boundary strength picture block, a frame type of the reconstructed picture block, and quantization parameter information, the encoder side may perform data rearrangement on only the reconstructed picture block, and does not perform data rearrangement on the other information.

Mode 2: If the to-be-filtered information includes, in addition to the reconstructed picture block, at least one of a predicted picture block corresponding to the reconstructed picture block, a boundary strength picture block, a frame type of the reconstructed picture block, and quantization parameter information, the encoder side performs data rearrangement on the reconstructed picture block according to the i^{th} data rearrangement mode, and performs data rearrangement on at least one of the predicted picture block, the boundary strength picture block, the frame type, and the quantization parameter information according to the i^{th} data rearrangement mode, to obtain the rearranged to-be-filtered information.

Mode 3: If the to-be-filtered information includes, in addition to the reconstructed picture block, at least one of a predicted picture block corresponding to the reconstructed picture block, a boundary strength picture block, a frame type of the reconstructed picture block, and quantization parameter information, the encoder side performs data rearrangement on the reconstructed picture block according to the i^{th} data rearrangement mode, performs data rearrangement on at least one of the predicted picture block and the boundary strength picture block according to the i^{th} data rearrangement mode, and skips performing data rearrangement on at least one of the frame type and the quantization parameter information, to obtain the rearranged to-be-filtered information.

The encoder side may determine the first data processing mode from the M+1 data processing modes in Mode 1, Mode 2, and Mode 3.

In all embodiments of the present disclosure, after the encoder side determines the first data processing mode, the following operations are further included.

Operation A: Indicate the first data processing mode in a bitstream.

In all embodiments of the present disclosure, after determining the first data processing mode according to the foregoing operations, the encoder side directly indicates the first data processing mode to the decoder side. In this way, the decoder side may obtain the first data processing mode by decoding the bitstream without a need to perform additional calculation. Therefore, calculation complexity on the decoder side is reduced, and decoding performance is improved.

In all embodiments of the present disclosure, an implementation of operation A includes but is not limited to the following several modes.

Mode 1: Operation A includes operation A-al and operation A-a2.

Operation A-a1: The encoder side determines a first flag according to the first data processing mode.

Operation A-a2: The encoder side writes the first flag into the bitstream, the first flag being configured for indicating whether to perform data rearrangement on the to-be-filtered information during filtering.

In Mode 1, the encoder side first determines a value of the first flag according to the first data processing mode. For example, if the encoder side determines that data rearrangement needs to be performed on the to-be-filtered information during filtering, that is, the first data processing mode is a data rearrangement mode, the encoder side sets the value of the first flag to yes (for example, 1), and then writes the first flag into the bitstream; or if the encoder side determines that data rearrangement does not need to be performed on the to-be-filtered information during filtering, that is, the first data processing mode is the data non-rearrangement mode, the encoder side sets the value of the first flag to no (for example, 0), and writes the first flag into the bitstream. In this way, the decoder side decodes the bitstream to obtain the first flag, and then determines the first data processing mode based on the first flag.

In all embodiments of the present disclosure, if the first flag indicates to perform data rearrangement on the to-be-filtered information during filtering, the encoder side further needs to write a second flag into the bitstream, the second flag being configured for indicating a data rearrangement mode for the to-be-filtered information.

Specific representation forms of the first flag and the second flag are not limited in all embodiments of the present disclosure.

In an example, a correspondence between values of the first flag and the second flag and a data processing mode is shown in Table 2.

As shown in Table 2, the encoder side first determines the value of the first flag according to the first data processing mode. For example, if the first data processing mode is the data non-rearrangement mode, the value of the first flag is set to 0; or if the first data processing mode is a data rearrangement mode, the value of the first flag is set to 1, and the second flag is further written into the bitstream. For example, if the first data processing mode is the mode of rotating left by 90°, a value of the second flag is set to 00, and then the second flag is written to the bitstream.

In Mode 1, the encoder side indicates the first data processing mode by using the first flag and the second flag.

Mode 2: In this mode, the encoder side may replace the first flag and the second flag with a flag, that is, a third flag. In other words, the third flag may indicate whether to perform data rearrangement on the to-be-filtered information during filtering, and may also indicate a specific data rearrangement mode. In this case, operation A includes operation A-b1 and operation A-b2.

Operation A-b1: The encoder side determines the third flag according to the first data processing mode.

Operation A-b2: The encoder side writes the third flag to the bitstream, the third flag being configured for indicating the first data processing mode.

In Mode 2, the encoder side directly indicates an index of the first data processing mode to the decoder side by using the third flag. Specifically, after determining the first data processing mode for the to-be-filtered information from the M+1 data processing modes, the encoder side indicates the first data processing mode to the decoder side by using the third flag. For example, if the first data processing mode is the data non-rearrangement mode, the encoder side sets a value of the third flag to a first value (for example, 0); or if the first data processing mode is a data rearrangement mode, the encoder side sets the third flag to another value. For example, when the first data processing mode is rotating left by 90°, the value of the third flag is set to 100. In this way, the decoder side decodes the bitstream to obtain the third flag, and then determines the first data processing mode from the M+1 data processing modes based on the value of the third flag.

A specific representation form of the third flag is not limited in all embodiments of the present disclosure.

In an example, a correspondence between the value of the third flag and a data processing mode is shown in Table 3.

If the reconstructed picture block is the reconstructed picture, the first flag, the second flag, and the third flag may be picture-level flag bits. If the reconstructed picture block is the partial region of the reconstructed picture, the first flag, the second flag, and the third flag may be block-level flag bits.

The foregoing describes a specific process in which the encoder side determines the first data processing mode for the to-be-filtered information. After determining the first data processing mode, the encoder side performs the following operation S202.

S202: Perform, if the first data processing mode is one of the M data rearrangement modes, data rearrangement on the reconstructed picture block according to the first data processing mode, to obtain rearranged to-be-filtered information, and filter the rearranged to-be-filtered information by using the neural network filter, to obtain a filtered picture block of the rearranged to-be-filtered information.

The encoder side determines the first data processing mode according to the foregoing operation. If the first data processing mode is the data non-rearrangement mode, the encoder side does not perform data rearrangement on the to-be-filtered information, but filters the to-be-filtered information by using the neural network filter, to obtain a filtered picture block of the reconstructed picture block.

If the first data processing mode is one of the M data rearrangement modes, it indicates that before the to-be-filtered information is inputted into the neural network filter, data rearrangement first needs to be performed.

In all embodiments of the present disclosure, the to-be-filtered information includes only the reconstructed picture block.

In all embodiments of the present disclosure, in addition to the reconstructed picture block, the to-be-filtered information further includes at least one of the predicted picture block corresponding to the reconstructed picture block, the boundary strength picture block, the frame type (slice type) of the reconstructed picture block, and the quantization parameter information. In all embodiments of the present disclosure, the quantization parameter information includes a slice quantization parameter (QP) and a base quantization parameter (QP).

In all embodiments of the present disclosure, if the first data processing mode is a data rearrangement mode, the encoder side performs data rearrangement on the to-be-filtered information in at least the following several modes.

In a first mode, the encoder side performs data rearrangement on only the reconstructed picture block in the to-be-filtered information, and does not perform data rearrangement on other information in the to-be-filtered information. For example, the to-be-filtered information includes information such as the reconstructed picture block, the predicted picture block corresponding to the reconstructed picture block, the boundary strength picture block, the frame type of the reconstructed picture block, and the quantization parameter information. The encoder side performs data rearrangement on the reconstructed picture block in the first data processing mode, and does not perform data rearrangement on the information such as the predicted picture block corresponding to the reconstructed picture block, the boundary strength picture block, the frame type of the reconstructed picture block, and the quantization parameter information. Because the information such as the predicted picture block corresponding to the reconstructed picture block, the boundary strength picture block, the frame type of the reconstructed picture block, and the quantization parameter information is auxiliary information of the reconstructed picture block, data rearrangement may not be performed on the information. Therefore, data rearrangement pressure on the encoder side can be reduced, to improve coding efficiency on the encoder side.

In a second mode, the encoder side performs data rearrangement on the reconstructed picture block according to the first data processing mode, and performs data rearrangement on at least one of the predicted picture block, the boundary strength picture block, the frame type, and the quantization parameter information according to the first data processing mode, to obtain the rearranged to-be-filtered information.

In a third mode, the encoder side performs data rearrangement on the reconstructed picture block according to the first data processing mode, performs data rearrangement on at least one of the predicted picture block and the boundary strength picture block according to the first data processing mode, and skips performing data rearrangement on at least one of the frame type and the quantization parameter information, to obtain the rearranged to-be-filtered information.

The encoder side uses the first data processing mode to perform data rearrangement on the reconstructed picture block in the to-be-filtered information or perform data rearrangement on the reconstructed picture block and other information in the to-be-filtered information, to obtain the rearranged to-be-filtered information. Then, the rearranged to-be-filtered information is inputted into the neural network filter, and the rearranged to-be-filtered information is filtered by using the neural network filter, to obtain the filtered picture block of the rearranged to-be-filtered information.

In all embodiments of the present disclosure, before filtering the to-be-filtered information, the encoder side first determines whether data rearrangement needs to be performed on the to-be-filtered information. If it is determined that data rearrangement needs to be performed, data rearrangement is performed on information such as the reconstructed picture block in the to-be-filtered information in the first data processing mode, so that a data distribution characteristic of the rearranged to-be-filtered information is the same as or close to the data distribution characteristic of the training data, improving a filtering effect of the neural network filter on the rearranged to-be-filtered information. Therefore, the picture filtering effect and the picture coding performance are improved.

S203: Perform data inverse rearrangement on the filtered picture block of the rearranged to-be-filtered information according to the first data processing mode, to obtain the filtered picture block of the reconstructed picture block.

In the foregoing operations, the encoder side performs data rearrangement on the information such as the reconstructed picture block in the to-be-filtered information, so that the neural network filter filters the rearranged to-be-filtered information to obtain the filtered picture block of the rearranged to-be-filtered information, where a data distribution characteristic of the filtered picture block of the rearranged to-be-filtered information is inconsistent with a data distribution characteristic of the to-be-filtered information. Therefore, in all embodiments of the present disclosure, after performing data rearrangement on the reconstructed picture block and the like in the to-be-filtered information in the first data processing mode, to obtain the filtered picture block of the rearranged to-be-filtered information, the encoder side further needs to perform data inverse rearrangement on the filtered picture block of the rearranged to-be-filtered information in the first data processing mode, to obtain the filtered picture block of the reconstructed picture block.

For example, the first data processing mode is rotating left by 90°. In this case, the encoder side needs to rotate the filtered picture block of the rearranged to-be-filtered information right by 90°, to obtain the filtered picture block of the reconstructed picture block.

For another example, the first data processing mode is rotating right by 90°. In this case, the encoder side needs to rotate the filtered picture block of the rearranged to-be-filtered information left by 90°, to obtain the filtered picture block of the reconstructed picture block.

In all embodiments of the present disclosure, the reconstructed picture block includes at least one of a reconstructed picture block for a Y component, a reconstructed picture block for a U component, and a reconstructed picture block for a V component. In other words, an adaptive data rearrangement mode in all embodiments of the present disclosure may be applied to at least one of the luminance component Y and the chrominance components U and V.

In all embodiments of the present disclosure, the picture filtering method in all embodiments of the present disclosure may be applied to a video encoder, for example, applied to loop filtering, where the filtered reconstructed picture is stored in a coding buffer for coding a next frame of picture. In this case, a filter output affects video coding.

In all embodiments of the present disclosure, the picture filtering method in all embodiments of the present disclosure may be applied to a product for video post-processing, for example, applied to a display side, that is, the filtered reconstructed picture is directly displayed without being put into the decoding buffer. In this case, a filter output does not affect video coding.

In all embodiments of the present disclosure, the picture filtering method in all embodiments of the present disclosure may be further applied to any module using a neural network in neural network-based video coding, for example, a neural network super-resolver or a neural network intra-frame prediction module, only with a need to replace the reconstructed picture block with a corresponding picture block.

According to the picture filtering method provided in all embodiments of the present disclosure, the encoder side determines the first data processing mode for the to-be-filtered information from the M+1 data processing modes. The M+1 data processing modes include the data non-rearrangement mode and the M data rearrangement modes. The to-be-filtered information includes the to-be-filtered reconstructed picture block. The reconstructed picture block is the constructed picture or the partial region of the reconstructed picture. M is a positive integer. If the first data processing mode is one of the M data rearrangement modes, the encoder side performs data rearrangement on the reconstructed picture block in the to-be-filtered information according to the first data processing mode, to obtain the rearranged to-be-filtered information, and filters the rearranged to-be-filtered information by using the neural network filter, to obtain the filtered picture block of the rearranged to-be-filtered information. The encoder side performs data inverse rearrangement on the filtered picture block of the rearranged to-be-filtered information according to the first data processing mode, to obtain the filtered picture block of the reconstructed picture block. To be specific, in this application, before filtering the to-be-filtered information, the encoder side first determines whether data rearrangement needs to be performed on the to-be-filtered information. If it is determined that data rearrangement needs to be performed, data rearrangement is performed on the reconstructed picture block in the to-be-filtered information in the first data processing mode, so that the data distribution characteristic of the rearranged to-be-filtered information is the same as or close to the data distribution characteristic of the training data, improving the filtering effect of the neural network filter on the rearranged to-be-filtered information. Therefore, the picture filtering effect and the picture coding performance are improved.

Preferred implementations of this application are described in detail above with reference to the accompanying drawings. However, this application is not limited to the specific details in the foregoing implementations. In the scope of the technical thinking of this application, many simple modifications can be performed on the technical solution of this application, and the simple modifications all belong to the protection scope of this application. For example, the various specific technical features described in the foregoing implementations may be combined in any suitable mode without contradiction. To avoid unnecessary repetition, various possible combination modes are not further described in this application. For another example, different implementations of this application may also be arbitrarily combined without departing from the idea of this application, and these combinations shall still be regarded as content disclosed in this application.

Sequence numbers of the foregoing processes do not mean execution sequences in all embodiments of the present disclosure. The execution sequences of the processes need to be determined according to functions and internal logic of the processes, and do not need to be construed as any limitation on the implementation processes of all embodiments of the present disclosure.

The method embodiments of this application are described in detail above with reference to FIG. 7 to FIG. 11, and apparatus embodiments of this application are described in detail below with reference to FIG. 12 to FIG. 13.

FIG. 12 is a schematic block diagram of a neural network-based picture filtering apparatus according to an embodiment of this application. The picture filtering apparatus is applied to a decoding device.

As shown in FIG. 12, the picture filtering apparatus 10 may include:
a rearrangement determining unit 11, configured to determine a first data processing mode for to-be-filtered information from M+1 data processing modes, the M+1 data processing modes including a data non-rearrangement mode and M data rearrangement modes, the to-be-filtered information including a to-be-filtered reconstructed picture block, the reconstructed picture block being a constructed picture or a partial region of a reconstructed picture, and M being a positive integer;
a rearrangement filtering unit 12, configured to: perform, if the first data processing mode is one of the M data rearrangement modes, data rearrangement on the reconstructed picture block according to the first data processing mode, to obtain rearranged to-be-filtered information, and filter the rearranged to-be-filtered information by using a neural network filter, to obtain a filtered picture block of the rearranged to-be-filtered information; and
an inverse rearrangement unit 13, configured to perform data inverse rearrangement on the filtered picture block of the rearranged to-be-filtered information according to the first data processing mode, to obtain a filtered picture block of the reconstructed picture block.

In all embodiments of the present disclosure, the rearrangement filtering unit 12 is further configured to filter, if the first data processing mode is the data non-rearrangement mode, the to-be-filtered information by using the neural network filter, to obtain the filtered picture block of the reconstructed picture block.

In all embodiments of the present disclosure, the first data processing mode is a data processing mode with a minimum filtering cost in the M+1 data processing modes.

In all embodiments of the present disclosure, the rearrangement determining unit 11 is specifically configured to determine the first data processing mode from the M+1 data processing modes by decoding a bitstream.

In all embodiments of the present disclosure, the rearrangement determining unit 11 is specifically configured to: decode the bitstream to obtain a first flag, the first flag being configured for indicating whether to perform data rearrangement on the to-be-filtered information during filtering; and obtain the first data processing mode from the M+1 data processing modes based on the first flag.

In all embodiments of the present disclosure, the rearrangement determining unit 11 is specifically configured to: determine the data non-rearrangement mode as the first data processing mode if the first flag indicates not to perform data rearrangement on the to-be-filtered information during filtering; or decode the bitstream to obtain a second flag if the first flag indicates to perform data rearrangement on the to-be-filtered information during filtering, and determine the first data processing mode from the M data rearrangement modes based on the second flag, the second flag being configured for indicating an index of a data rearrangement mode for the to-be-filtered information.

In all embodiments of the present disclosure, the rearrangement determining unit 11 is specifically configured to: decode the bitstream to obtain a third flag, the third flag being configured for indicating the first data processing mode; and determine the first data processing mode from the M+1 data processing modes based on the third flag.

In all embodiments of the present disclosure, the M data rearrangement modes include at least one of the following: a rotation mode, a mode of horizontal flipping and then rotation, a mode of vertical flipping and then rotation, a mode of diagonal flipping and then rotation, a mode of downsampling and then rotation, and a mode of upsampling and then rotation.

In all embodiments of the present disclosure, the rotation mode includes any one of rotating left by (N*90)° or rotating right by (N*90)°, N being a positive integer.

In all embodiments of the present disclosure, the rearrangement filtering unit 12 is further configured to filter, if the first data processing mode is the data non-rearrangement mode, the to-be-filtered information by using the neural network filter, to obtain the filtered picture block of the reconstructed picture block.

In all embodiments of the present disclosure, the reconstructed picture block includes at least one of a reconstructed picture block for a Y component, a reconstructed picture block for a U component, and a reconstructed picture block for a V component.

In all embodiments of the present disclosure, the to-be-filtered information further includes at least one of a predicted picture block corresponding to the reconstructed picture block, a boundary strength picture block, a frame type of the reconstructed picture block, and quantization parameter information.

In all embodiments of the present disclosure, the rearrangement filtering unit 12 is specifically configured to: perform data rearrangement on the reconstructed picture block according to the first data processing mode, and perform data rearrangement on at least one of the predicted picture block, the boundary strength picture block, the frame type, and the quantization parameter information according to the first data processing mode, to obtain the rearranged to-be-filtered information.

The apparatus embodiment and the method embodiment may correspond to each other. For similar descriptions, refer to the method embodiment. To avoid repetition, details are not described herein again. Specifically, the apparatus shown in FIG. 12 may perform the method embodiment shown in FIG. 7, and the foregoing and other operations and/or functions of the modules in the apparatus are respectively for implementing the method embodiment corresponding to the decoder. For brevity, details are not described herein.

FIG. 13 is a schematic block diagram of a neural network-based picture filtering apparatus according to an embodiment of this application. The picture filtering apparatus is applied to a coding device.

As shown in FIG. 13, the picture filtering apparatus 20 may include:
a rearrangement determining unit 21, configured to determine a first data processing mode for to-be-filtered information from M+1 data processing modes, the M+1 data processing modes including a data non-rearrangement mode and M data rearrangement modes, the to-be-filtered information including a reconstructed picture block, the reconstructed picture block being a constructed picture or a partial region of a reconstructed picture, and M being a positive integer;
a rearrangement filtering unit 22, configured to: perform, if the first data processing mode is one of the M data rearrangement modes, data rearrangement on the to-be-filtered information according to the first data processing mode, to obtain rearranged to-be-filtered information, and filter the rearranged to-be-filtered information by using a neural network filter, to obtain a filtered picture block of the rearranged to-be-filtered information; and
an inverse rearrangement unit 23, configured to perform data inverse rearrangement on the filtered picture block of the rearranged to-be-filtered information according to the first data processing mode, to obtain a filtered picture block of the reconstructed picture block.

In all embodiments of the present disclosure, the rearrangement filtering unit 22 is further configured to filter, if the first data processing mode is the data non-rearrangement mode, the to-be-filtered information by using the neural network filter, to obtain the filtered picture block of the reconstructed picture block.

In all embodiments of the present disclosure, the rearrangement determining unit 21 is specifically configured to: determine filtering costs respectively corresponding to the M+1 data processing modes; and determine a data processing mode with a minimum filtering cost in the M+1 data processing modes as the first data processing mode.

In all embodiments of the present disclosure, the rearrangement determining unit 21 is specifically configured to: perform, for an i^{th} data rearrangement mode in the M data rearrangement modes, data rearrangement on the reconstructed picture according to the i^{th} data rearrangement mode, and filter, by using the neural network filter, to-be-filtered information obtained through rearrangement in the i^{th} data rearrangement mode, to obtain an i^{th} filtered picture block, i being a positive integer less than or equal to M; perform data inverse rearrangement on the i^{th} filtered picture block according to the i^{th} data rearrangement mode, to obtain a filtered picture block in the i^{th} data rearrangement mode; and determine, based on the filtered picture block in the i^{th} data rearrangement mode and an original picture block of the reconstructed picture block, a filtering cost corresponding to the i^{th} data rearrangement mode.

In all embodiments of the present disclosure, the rearrangement determining unit 21 is specifically configured to: filter the to-be-filtered information by using the neural network filter, to obtain a filtered picture block in the data non-rearrangement mode; and determine, based on the filtered picture block in the data non-rearrangement mode and the original picture block of the reconstructed picture block, the filtering cost corresponding to the data non-rearrangement mode.

In all embodiments of the present disclosure, the rearrangement filtering unit 22 is further configured to indicate the first data processing mode in a bitstream.

In all embodiments of the present disclosure, the rearrangement filtering unit 22 is specifically configured to: determine a first flag according to the first data processing mode; and write the first flag into the bitstream, the first flag being configured for indicating whether to perform data rearrangement on the to-be-filtered information during filtering.

In all embodiments of the present disclosure, if the first flag indicates to perform data rearrangement on the to-be-filtered information during filtering, the rearrangement filtering unit 22 is further configured to write a second flag into the bitstream, the second flag being configured for indicating a data rearrangement mode for the to-be-filtered information.

In all embodiments of the present disclosure, the rearrangement filtering unit 22 is specifically configured to: determine a third flag according to the first data processing mode; and write the third flag to the bitstream, the third flag being configured for indicating the first data processing mode.

In all embodiments of the present disclosure, the M data rearrangement modes include at least one of the following: a rotation mode, a mode of horizontal flipping and then rotation, a mode of vertical flipping and then rotation, a mode of diagonal flipping and then rotation, a mode of downsampling and then rotation, and a mode of upsampling and then rotation.

In all embodiments of the present disclosure, the rotation mode includes any one of rotating left by (N*90)° or rotating right by (N*90)°, N being a positive integer.

In all embodiments of the present disclosure, the rearrangement filtering unit 22 is further configured to filter, if the first data processing mode is the data non-rearrangement mode, the to-be-filtered information by using the neural network filter, to obtain the filtered picture block of the reconstructed picture block.

In all embodiments of the present disclosure, the reconstructed picture block includes at least one of a reconstructed picture block for a Y component, a reconstructed picture block for a U component, and a reconstructed picture block for a V component.

In all embodiments of the present disclosure, the to-be-filtered information further includes at least one of a predicted picture block corresponding to the reconstructed picture block, a boundary strength picture block, a frame type of the reconstructed picture block, and quantization parameter information.

In all embodiments of the present disclosure, the rearrangement filtering unit 22 is specifically configured to: perform data rearrangement on the reconstructed picture block according to the first data processing mode, and perform data rearrangement on at least one of the predicted picture block, the boundary strength picture block, the frame type, and the quantization parameter information according to the first data processing mode, to obtain the rearranged to-be-filtered information.

The apparatus embodiment and the method embodiment may correspond to each other. For similar descriptions, refer to the method embodiment. To avoid repetition, details are not described herein again. Specifically, the apparatus shown in FIG. 13 may perform the method embodiment shown in FIG. 11, and the foregoing and other operations and/or functions of the modules in the apparatus are respectively for implementing the method embodiment corresponding to the encoder. For brevity, details are not described herein.

The apparatus of the embodiments of this application is described above with reference to the accompanying drawings from a perspective of a functional module. The functional module may be implemented in a form of hardware, may be implemented in a form of software, or may be implemented in a combination of hardware and a software module. Specifically, the operations in the method embodiment in the embodiments of this application may be directly completed by using a hardware integrated logic circuit in a processor and/or instructions in a software form. The operations of the method disclosed with reference to all embodiments of the present disclosure may be directly performed and completed by using a hardware decoding processor, or may be performed and completed by using a combination of hardware in a decoding processor and a software module. In all embodiments of the present disclosure, the software module may be located in a mature storage medium in the art, such as a random access memory, a flash memory, a read-only memory, a programmable read-only memory, an electrically erasable programmable memory, and a register. The storage medium is located in a memory. The processor reads information in the memory, and completes the operations in the foregoing method embodiment in combination with the hardware of the processor.

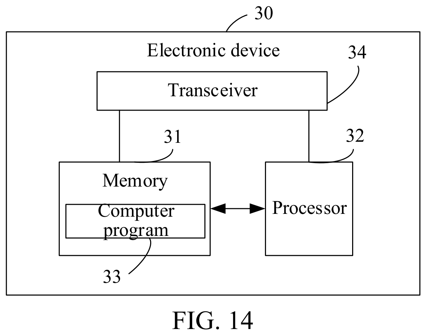

FIG. 14 is a schematic block diagram of an electronic device according to an embodiment of this application. The electronic device in FIG. 14 may be the foregoing encoder or decoder, or another picture filtering device.

As shown in FIG. 14, the electronic device 30 may include:
a memory 31 and a processor 32, where the memory 31 is configured to store a computer program 33 and transmit the computer program 33 to the processor 32; in other words, the processor 32 may invoke the computer program 33 from the memory 31 and run the computer program to implement the method in all embodiments of the present disclosure.

For example, the processor 32 may be configured to perform the operations in the foregoing method 200 according to instructions in the computer program 33.

In all embodiments of the present disclosure, the processor 32 may include but is not limited to:
a general-purpose processor, a digital signal processor (DSP), an application-specific integrated circuit (ASIC), a field programmable gate array (FPGA) or another programmable logic device, a discrete gate or transistor logic device, a discrete hardware component, and the like.

In all embodiments of the present disclosure, the memory 31 includes but is not limited to:
a volatile and/or a non-volatile memory, where the non-volatile memory may be a read-only memory (ROM), a programmable ROM (PROM), an erasable PROM (EPROM), an electrically EPROM (EEPROM), or a flash memory; the volatile memory may be a random access memory (RAM), used as an external cache; and by way of example, and not limitation, many forms of RAMs may be used, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a direct rambus RAM (DR RAM).

In all embodiments of the present disclosure, the computer program 33 may be divided into one or more modules, and the one or more modules are stored in the memory 31 and executed by the processor 32 to complete the neural network-based picture filtering methods provided in all embodiments of the present disclosure. The one or more modules may be a series of computer program instruction segments that can implement specific functions. The instruction segments are configured for describing an execution process of the computer program 33 in the electronic device.

As shown in FIG. 14, the electronic device 30 may further include:
a transceiver 34, where the transceiver 34 may be connected to the processor 32 or the memory 31.

The processor 32 may control the transceiver 34 to communicate with another device. Specifically, the transceiver may transmit information or data to the another device, or may receive information or data transmitted by the another device. The transceiver 34 may include a transmitter and a receiver. The transceiver 34 may further include an antenna, and a quantity of antennas may be one or more.

Various components in the electronic device 30 are connected via a bus system. In addition to a data bus, the bus system further includes a power bus, a control bus, and a status signal bus.

According to an aspect of this application, a computer storage medium is provided. The computer storage medium has a computer program stored therein, and when the computer program is executed by a computer, the computer is enabled to perform the method in the method embodiments. Alternatively, an embodiment of this application further provides a computer program product including instructions. When executed by a computer, the instructions enable the computer to perform the method in the method embodiments.

According to another aspect of this application, a computer program product or a computer program is provided. The computer program product or the computer program includes computer instructions. The computer instructions are stored in a computer-readable storage medium. A processor of a computer device reads the computer instructions from the computer-readable storage medium. The processor executes the computer instructions, so that the computer device performs the method in the method embodiments.

In other words, when software is used to implement the embodiments, the embodiments may be implemented completely or partially in a form of a computer program product. The computer program product includes one or more computer instructions. When the computer instructions are loaded and executed on a computer, all or some of the procedures or functions according to all embodiments of the present disclosure are generated. The computer may be a general-purpose computer, a dedicated computer, a computer network, or another programmable apparatus. The computer instructions may be stored in the computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) mode. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid state disk (SSD)), or the like.

The modules described as separate parts may or may not be physically separate, and parts displayed as modules may or may not be physical modules, and may be located at one position, or may be distributed on a plurality of network units. Some or all of the modules may be selected according to actual needs to implement the solutions of the embodiments. For example, the functional modules in all embodiments of the present disclosure may be integrated into one processing module, or the functional modules may exist alone physically, or two or more modules may be integrated into one module.

The above descriptions are merely specific implementations of this application, and are not intended to limit the protection scope of this application. Any variation or replacement readily figured out by a person skilled in the art within the technical scope disclosed in this application falls within the protection scope of this application. Therefore, the protection scope of this application shall be subject to the protection scope of the claims.

## Claims

1. A neural network-based picture filtering method, executable by a decoding device, the method comprising:
determining a first data processing mode for to-be-filtered information from M+1 data processing modes, the M+1 data processing modes comprising a data non-rearrangement mode and M data rearrangement modes, the to-be-filtered information comprising a to-be-filtered reconstructed picture block, and M being a positive integer;
when the first data processing mode is one of the M data rearrangement modes, performing data rearrangement on the reconstructed picture block according to the first data processing mode, to obtain rearranged to-be-filtered information;
filtering the rearranged to-be-filtered information by using a neural network filter, to obtain a filtered picture block of the rearranged to-be-filtered information; and
performing data inverse rearrangement on the filtered picture block of the rearranged to-be-filtered information according to the first data processing mode, to obtain a filtered picture block of the reconstructed picture block.

2. The method according to claim 1, further comprising:
when the first data processing mode is the data non-rearrangement mode, filtering the to-be-filtered information by using the neural network filter, to obtain the filtered picture block of the reconstructed picture block.

3. The method according to claim 1 or 2, wherein the first data processing mode is a data processing mode with a minimum filtering cost in the M+1 data processing modes.

4. The method according to any one of claims 1 to 3, wherein the determining a first data processing mode for to-be-filtered information from M+1 data processing modes comprises:
decoding a bitstream to obtain a first flag indicating whether to perform data rearrangement on the to-be-filtered information during filtering; and
determining the data non-rearrangement mode as the first data processing mode when the first flag indicates not to perform data rearrangement on the to-be-filtered information during filtering; or
when the first flag indicates to perform data rearrangement on the to-be-filtered information during filtering, decoding the bitstream to obtain a second flag indicating an index of a data rearrangement mode for the to-be-filtered information, and determining the first data processing mode from the M data rearrangement modes based on the second flag.

5. The method according to any one of claims 1 to 3, wherein the determining a first data processing mode for to-be-filtered information from M+1 data processing modes comprises:
decoding a bitstream to obtain a third flag indicating the first data processing mode; and
determining the first data processing mode from the M+1 data processing modes based on the third flag.

6. The method according to any one of claims 1 to 5, wherein the M data rearrangement modes comprise at least one of the following: a rotation mode, a mode of horizontal flipping and then rotation, a mode of vertical flipping and then rotation, a mode of diagonal flipping and then rotation, a mode of downsampling and then rotation, and a mode of upsampling and then rotation.

7. The method according to claim 6, wherein the rotation mode comprises any one of rotating left by (N*90)° or rotating right by (N*90)°, N being a positive integer.

8. The method according to any one of claims 1 to 7, wherein the to-be-filtered information further comprises at least one of a predicted picture block corresponding to the reconstructed picture block, a boundary strength picture block, a frame type of the reconstructed picture block, and quantization parameter information.

9. The method according to claim 8, wherein the performing data rearrangement on the reconstructed picture block according to the first data processing mode, to obtain rearranged to-be-filtered information comprises:
performing data rearrangement on the reconstructed picture block according to the first data processing mode, and performing data rearrangement on at least one of the predicted picture block, the boundary strength picture block, the frame type, and the quantization parameter information according to the first data processing mode, to obtain the rearranged to-be-filtered information.

10. A neural network-based picture filtering method, executable by a coding device, the method comprising:
determining a first data processing mode for to-be-filtered information from M+1 data processing modes, the M+1 data processing modes comprising a data non-rearrangement mode and M data rearrangement modes, the to-be-filtered information comprising a reconstructed picture block, the reconstructed picture block being a constructed picture or a partial region of a reconstructed picture, and M being a positive integer;
performing, if the first data processing mode is one of the M data rearrangement modes, data rearrangement on the to-be-filtered information according to the first data processing mode, to obtain rearranged to-be-filtered information;
filtering the rearranged to-be-filtered information by using a neural network filter, to obtain a filtered picture block of the rearranged to-be-filtered information; and
performing data inverse rearrangement on the filtered picture block of the rearranged to-be-filtered information according to the first data processing mode, to obtain a filtered picture block of the reconstructed picture block.

11. The method according to claim 10, further comprising:
filtering, if the first data processing mode is the data non-rearrangement mode, the to-be-filtered information by using the neural network filter, to obtain the filtered picture block of the reconstructed picture block.

12. The method according to claim 10 or 11, wherein the determining a first data processing mode for to-be-filtered information from M+1 data processing modes comprises:
determining filtering costs respectively corresponding to the M+1 data processing modes; and
determining a data processing mode with a minimum filtering cost in the M+1 data processing modes as the first data processing mode.

13. The method according to any one of claims 10 to 12, wherein determining filtering costs respectively corresponding to the M data rearrangement modes comprises:
performing, for an i^{th} data rearrangement mode in the M data rearrangement modes, data rearrangement on the reconstructed picture according to the i^{th} data rearrangement mode, and filtering, by using the neural network filter, to-be-filtered information obtained through rearrangement in the i^{th} data rearrangement mode, to obtain an i^{th} filtered picture block, i being a positive integer less than or equal to M;
performing data inverse rearrangement on the i^{th} filtered picture block according to the i^{th} data rearrangement mode, to obtain a filtered picture block in the i^{th} data rearrangement mode; and
determining, based on the filtered picture block in the i^{th} data rearrangement mode and an original picture block of the reconstructed picture block, a filtering cost corresponding to the i^{th} data rearrangement mode.

14. The method according to claim 12 or 13, wherein determining a filtering cost corresponding to the data non-rearrangement mode comprises:
filtering the to-be-filtered information by using the neural network filter, to obtain a filtered picture block in the data non-rearrangement mode; and
determining, based on the filtered picture block in the data non-rearrangement mode and the original picture block of the reconstructed picture block, the filtering cost corresponding to the data non-rearrangement mode.

15. The method according to any one of claims 10 to 14, further comprising:
writing a first flag into a bitstream, the first flag being configured for indicating whether to perform data rearrangement on the to-be-filtered information during filtering; and
writing a second flag into the bitstream if the first flag indicates to perform data rearrangement on the to-be-filtered information during filtering, the second flag being configured for indicating a data rearrangement mode for the to-be-filtered information.

16. The method according to any one of claims 10 to 15, wherein the M data rearrangement modes comprise at least one of the following: a rotation mode, a mode of horizontal flipping and then rotation, a mode of vertical flipping and then rotation, a mode of diagonal flipping and then rotation, a mode of downsampling and then rotation, and a mode of upsampling and then rotation.

17. The method according to any one of claims 10 to 16, wherein the to-be-filtered information further comprises at least one of a predicted picture block corresponding to the reconstructed picture block, a boundary strength picture block, a frame type of the reconstructed picture block, and quantization parameter information.

18. The method according to claim 17, wherein the performing data rearrangement on the reconstructed picture block according to the first data processing mode, to obtain rearranged to-be-filtered information comprises:
performing data rearrangement on the reconstructed picture block according to the first data processing mode, and performing data rearrangement on at least one of the predicted picture block, the boundary strength picture block, the frame type, and the quantization parameter information according to the first data processing mode, to obtain the rearranged to-be-filtered information.

19. A neural network-based picture filtering apparatus, applied to a decoding device, the apparatus comprising:
a rearrangement determining unit, configured to determine a first data processing mode for to-be-filtered information from M+1 data processing modes, the M+1 data processing modes comprising a data non-rearrangement mode and M data rearrangement modes, the to-be-filtered information comprising a to-be-filtered reconstructed picture block, the reconstructed picture block being a constructed picture or a partial region of a reconstructed picture, and M being a positive integer;
a rearrangement filtering unit, configured to: perform, if the first data processing mode is one of the M data rearrangement modes, data rearrangement on the reconstructed picture block according to the first data processing mode, to obtain rearranged to-be-filtered information, and filter the rearranged to-be-filtered information by using a neural network filter, to obtain a filtered picture block of the rearranged to-be-filtered information; and
an inverse rearrangement unit, configured to perform data inverse rearrangement on the filtered picture block of the rearranged to-be-filtered information according to the first data processing mode, to obtain a filtered picture block of the reconstructed picture block.

20. A neural network-based picture filtering apparatus, applied to a coding device, the apparatus comprising:
a rearrangement determining unit, configured to determine a first data processing mode for to-be-filtered information from M+1 data processing modes, the M+1 data processing modes comprising a data non-rearrangement mode and M data rearrangement modes, the to-be-filtered information comprising a reconstructed picture block, the reconstructed picture block being a constructed picture or a partial region of a reconstructed picture, and M being a positive integer;
a rearrangement filtering unit, configured to: perform, if the first data processing mode is one of the M data rearrangement modes, data rearrangement on the to-be-filtered information according to the first data processing mode, to obtain rearranged to-be-filtered information, and filter the rearranged to-be-filtered information by using a neural network filter, to obtain a filtered picture block of the rearranged to-be-filtered information; and
an inverse rearrangement unit, configured to perform data inverse rearrangement on the filtered picture block of the rearranged to-be-filtered information according to the first data processing mode, to obtain a filtered picture block of the reconstructed picture block.

21. An electronic device, comprising a processor and a memory,
the memory being configured to store a computer program; and
the processor being configured to execute the computer program, to implement the method according to any one of claims 1 to 9 or 10 to 18.

22. A computer-readable storage medium, configured to store a computer program and a bitstream,
the computer program enabling a computer to perform the method according to any one of claims 1 to 9 or 10 to 18, to generate the bitstream or decode the bitstream.

23. A computer program product, comprising computer instructions, the computer instructions, when executed by a processor, causing the method according to any one of claims 1 to 9 or 10 to 18 to be implemented.
